# EUROPEAN PATENT APPLICATION

(11) **EP 4 460 076 A1**
(43) Date of publication of application: **06.11.2024**
(21) Application number: 23745976.3
(22) Date of filing: 12.01.2023
(51) Int. Cl.: H04W 24/10

(54) **SIDELINK POSITIONING REFERENCE SIGNAL (SL PRS) PARAMETER CONFIGURATION METHOD AND APPARATUS**

(30) Priority: 30.01.2022 CN 202210114396
(71) Applicant: Huawei Technologies Co., Ltd., Shenzhen, Guangdong 518129 (CN)
(72) Inventor: HUANG, Su, Shenzhen, Guangdong 518129 (CN); SU, Hongjia, Shenzhen, Guangdong 518129 (CN)
(74) Representative: Grünecker Patent- und Rechtsanwälte PartG mbB
(86) International application number: PCT/CN2023/071874
(87) International publication number: WO 2023/143093

(57) **Abstract**

This application provides a sidelink positioning reference signal SL PRS parameter configuration method and an apparatus, and relates to the field of wireless communication technologies, to configure an SL PRS-related parameter for a terminal device. In the method, a first terminal device obtains first information, where the first information includes one or more first triggering states, and each of the one or more first triggering states is associated with one or more SL PRS resources. The first terminal device sends second information to a second terminal device, where he second information includes one or more positioning measurement types, and each of the one or more positioning measurement types is associated with the one or more first triggering states. Based on the foregoing solution, an SL PRS associated with the first triggering state may be configured for a terminal device, and the first terminal device determines the positioning measurement type for the second terminal device, so that an SL PRS parameter is configured, and transmission of the SLPRS can be supported.

## Description

### CROSS-REFERENCE TO RELATED APPLICATIONS

This application claims priority to Chinese Patent Application No. 202210114396.7, filed with the China National Intellectual Property Administration on January 30, 2022 and entitled "SIDELINK POSITIONING REFERENCE SIGNAL SL PRS PARAMETER CONFIGURATION METHOD AND APPARATUS", which is incorporated herein by reference in its entirety.

### TECHNICAL FIELD

This application relates to the field of wireless communication technologies, and in particular, to a sidelink positioning reference signal SL PRS parameter configuration method and an apparatus.

### BACKGROUND

In 3GPP standards, a plurality of positioning technologies are supported such as downlink-time difference of arrival (downlink-time difference of arrival, DL-TDOA), downlink-angle of departure (downlink-angle of departure, DL-AOD), uplink-time difference of arrival (uplink-time difference of arrival, UL-TDOA), uplink-angle of arrival (uplink-angle of arrival, UL-AOA), and multi-round trip time (multi-round trip time, multi-RTT).

For the DL-TDOA, DL-AoA, and multi-RTT positioning technologies, measurement based on a positioning reference signal (positioning reference signal, PRS) only between a terminal device and a network device is supported currently.

However, transmission of a PRS between terminal devices is not supported currently. Therefore, in sidelink, how to configure a PRS-related parameter for sidelink (sidelink, SL) PRS transmission becomes an urgent problem to be resolved.

### SUMMARY

This application provides a sidelink positioning reference signal SL PRS parameter configuration method, to configure an SL PRS-related parameter for a terminal device.

According to a first aspect, a sidelink positioning reference signal SL PRS parameter configuration method is provided. The method may be performed by a first terminal device, or may be performed by a chip with a function similar to that of the first terminal device. In the method, the first terminal device obtains first information. For example, the first terminal device may obtain the first information from a network device. Alternatively, the first terminal device may obtain preconfigured first information. The first information includes one or more first triggering states, and each of the one or more first triggering states is associated with one or more SLPRS resources. The first terminal device sends second information to a second terminal device. The second information includes one or more positioning measurement types, and each of the one or more positioning measurement types is associated with the one or more first triggering states.

Based on the foregoing solution, the first terminal device may obtain the first triggering state and an SL PRS associated with the first triggering state, and the first terminal device configures the positioning measurement type for the second terminal device. In this way, an SL PRS associated with each first triggering state and a positioning measurement type associated with the first triggering state can be determined, to configure a related parameter of the SL PRS, and support transmission of the SL PRS.

For example, the positioning measurement type may include at least one of a receiving-sending time difference, a receiving-sending frequency difference, SL relative time of arrival (relative time of arrival, RTOA), SL time of arrival (time of arrival, TOA), an SL-TDOA, an SL angle of arrival (angle of arrival, AOA), which is referred to as an SL azimuth angle of arrival (azimuth angle of arrival, AOA), an SL zenith angle of arrival (zenith angle of arrival, ZOA), receive Doppler, or a receive first-path phase.

Optionally, the second information sent by the first terminal device to the second terminal device includes at least one of the receiving-sending time difference, the receiving-sending frequency difference, the SL-RTOA, the SL-TOA, the SL-TDOA, the SL-AOA, the SL-ZOA, the receive Doppler, the receive first-path phase, and that positioning measurement does not need to be reported. Each of the at least one of the receiving-sending time difference, the receiving-sending frequency difference, the SL-RTOA, the SL-TOA, the SL-TDOA, the SL-AOA, the SL-ZOA, the receive Doppler, the receive first-path phase, and that positioning measurement does not need to be reported that are included in the second information is associated with the one or more first triggering states.

In a possible implementation of the first aspect, the first terminal device sends first control information to the second terminal device, where the first control information indicates one or more of the first triggering states. The first terminal device sends an SL PRS corresponding to an SL PRS resource associated with the one or more first triggering states indicated by the first control information. For example, the first control information may be sidelink control information (sidelink control information, SCI).

Based on the foregoing solution, the first terminal device may indicate the triggered first triggering state to the second terminal device based on the first control information, in other words, may indicate a to-be-sent SL PRS to the second terminal device. In this way, the first terminal device may send the to-be-sent SL PRS to the second terminal device, to implement transmission of the SL PRS between the first terminal device and the second terminal device.

In a possible implementation of the first aspect, the first terminal device receives third information from the second terminal device, where the third information includes one or more measurement values. The one or more measurement values are measurement values of the one or more positioning measurement types in the second information. The one or more positioning measurement types in the second information are associated with the one or more first triggering states indicated by the first control information. For example, the one or more measurement values are obtained by the second terminal device based on the SLPRS associated with the first triggering state indicated by the first control information. For example, the second terminal device may measure the SL PRS associated with the first triggering state indicated by the first control information, to obtain a measurement value of each positioning measurement type associated with the first triggering state indicated by the first control information.

Based on the foregoing solution, the first terminal device may receive the measurement value obtained by the second terminal device based on SLPRS measurement. Therefore, a specific positioning technology based on the SL PRS can be implemented.

In a possible implementation of the first aspect, the first terminal device sends indication information to the second terminal device, where the indication information indicates to reversely transmit an SL PRS, and the reversely transmitted SL PRS is an SL PRS sent by the second terminal device. For example, the reversely transmitted SL PRS is an SL PRS that is sent by the second terminal device and that is received by the first terminal device.

Based on the foregoing solution, the first terminal device may indicate to reversely transmit the SL PRS to the second terminal device by using the indication information, that is, the first terminal device indicates the second terminal device to send the SL PRS, so that SL PRS transmission can be flexibly applied to more scenarios, for example, RTT measurement.

In a possible implementation of the first aspect, the first terminal device receives third control information from the second terminal device, where the third control information indicates one or more of the first triggering states. The first terminal device receives an SL PRS corresponding to an SL PRS resource associated with the one or more first triggering states indicated by the third control information. For example, when the first terminal device indicates the second terminal device to reversely transmit the SL PRS, the second terminal device may indicate the one or more first triggering states to the first terminal device by using the third control information, and SL PRSs associated with these first triggering states may be understood as reversely transmitted SL PRSs. Therefore, the first terminal device may receive the SL PRS reversely transmitted by the second terminal device.

Based on the foregoing solution, the first terminal device may receive the SL PRS reversely transmitted by the second terminal device, so that a method in which the first terminal device indicates the second terminal device to transmit the SL PRS is implemented, and SL PRS transmission can also be flexibly applied to more scenarios, for example, RTT measurement.

In a possible implementation of the first aspect, the first terminal device sends second control information to the second terminal device, where the second control information indicates a format of the first control information. For example, the first control information is 2^{nd} stage SCI, the second control information is 1^{st} stage SCI, and the 1^{st} stage SCI indicates a format of the 2^{nd} stage SCI.

Based on the foregoing solution, the first terminal device indicates the first triggering state by using the first control information, and indicates the format of the first control information by using the second control information. A quantity of bits that can indicate the first triggering state in the first control information is greater than a quantity of bits that indicate the first triggering state in the second control information, that is, there are a large quantity of bits that can indicate the first triggering state, so that a large quantity of first triggering states can be configured to support SL PRS transmission.

For example, the first control information may be 1^{st} stage SCI. Because the second terminal device first receives the 1^{st} stage SCI, and then receives the 2^{nd} stage SCI based on information in the 1^{st} stage SCI, the second terminal device may quickly determine the first triggering state indicated by the first control information, so that a scheduled SL PRS resource can be quickly determined.

In a possible implementation of the first aspect, the first terminal device sends fourth information to the second terminal device. The fourth information includes one or more non-positioning measurement types, and each of the one or more non-positioning measurement types is associated with the one or more first triggering states. The non-positioning measurement type includes one or more of the following: serving network device information of a terminal device, absolute location information of the terminal device, or orientation information of the terminal device.

In a possible implementation of the first aspect, the first terminal device sends fourth information to the second terminal device. The fourth information includes at least one of the following: serving network device information of a terminal device, absolute location information of the terminal device, and orientation information of the terminal device. Each of the at least one of the serving network device information of the terminal device, the absolute location information of the terminal device, and the orientation information of the terminal device that are included in the fourth information is associated with the one or more first triggering states.

Based on the foregoing solution, the first terminal device may further configure a type other than the positioning measurement type for the second terminal device, so that not only the SLPRS is applied to a positioning scenario, but also the SL PRS can be applied to a scenario other than the positioning scenario.

In a possible implementation of the first aspect, the first terminal device receives fifth information from the second terminal device, where the fifth information includes a value of one or more non-positioning measurement types associated with the one or more first triggering states indicated by the first control information. For example, the value of the one or more non-positioning measurement types is obtained by the second terminal device based on the SL PRS associated with the first triggering state indicated by the first control information. For example, after receiving the SL PRS associated with the first triggering state indicated by the first control information, the second terminal device may send, to the first terminal device, a value of a non-positioning measurement type associated with each first triggering state.

Based on the foregoing solution, the first terminal device may receive the value that is of the non-positioning measurement type associated with the first triggering state and that is sent by the second terminal device, to obtain information about the second terminal device, for example, orientation information, serving network device information, or absolute location information.

According to a second aspect, a sidelink positioning reference signal SL PRS parameter configuration method is provided. The method may be performed by a second terminal device, or may be performed by a chip with a function similar to that of the second terminal device. In the method, the second terminal device obtains first information. The first information includes one or more first triggering states, and each of the one or more first triggering states is associated with one or more SL PRS resources. The second terminal device receives second information from a first terminal device. The second information includes one or more positioning measurement types, and each of the one or more positioning measurement types is associated with the one or more first triggering states.

Optionally, the second information received by the second terminal device includes at least one of a receiving-sending time difference, a receiving-sending frequency difference, SL-RTOA, SL-TOA, an SL-TDOA, an SL-AOA, an SL-ZOA, receive Doppler, a receive first-path phase, and that positioning measurement does not need to be reported. Each of the at least one of the receiving-sending time difference, the receiving-sending frequency difference, the SL-RTOA, the SL-TOA, the SL-TDOA, the SL-AOA, the SL-ZOA, the receive Doppler, the receive first-path phase, and that the positioning measurement does not need to be reported that are included in the second information is associated with the one or more first triggering states.

In a possible implementation of the second aspect, the second terminal device receives first control information from the first terminal device, where the first control information indicates one or more of the first triggering states. The second terminal device receives an SL PRS corresponding to an SL PRS resource associated with the one or more first triggering states indicated by the first control information.

In a possible implementation of the second aspect, the second terminal device sends third information to the first terminal device, where the third information includes one or more measurement values. The one or more measurement values are measurement values of the one or more positioning measurement types in the second information. The one or more positioning measurement types in the second information are associated with the one or more first triggering states indicated by the first control information.

In a possible implementation of the second aspect, the second terminal device receives indication information from the first terminal device, where the indication information indicates to reversely transmit an SL PRS, and the reversely transmitted SL PRS is an SL PRS sent by the second terminal device.

In a possible implementation of the second aspect, the second terminal device sends third control information to the first terminal device, where the third control information indicates one or more of the first triggering states. The second terminal device sends an SL PRS corresponding to an SL PRS resource associated with the one or more first triggering states indicated by the third control information.

In a possible implementation of the second aspect, the second terminal device receives second control information from the first terminal device, where the second control information indicates a format of the first control information.

In a possible implementation of the second aspect, the second terminal device receives fourth information from the first terminal device. The fourth information includes one or more non-positioning measurement types, and each of the one or more non-positioning measurement types is associated with the one or more first triggering states. The non-positioning measurement type includes one or more of the following: serving network device information of a terminal device, absolute location information of the terminal device, or orientation information of the terminal device.

In a possible implementation of the second aspect, the second terminal device receives fourth information from the first terminal device. The fourth information includes at least one of the following: serving network device information of a terminal device, absolute location information of the terminal device, and orientation information of the terminal device. Each of the at least one of the serving network device information of the terminal device, the absolute location information of the terminal device, and the orientation information of the terminal device that are included in the fourth information is associated with the one or more first triggering states.

In a possible implementation of the second aspect, the second terminal device sends fifth information to the first terminal device, where the fifth information includes a value of one or more non-positioning measurement types associated with the one or more first triggering states indicated by the first control information.

In a possible implementation of the first aspect and the second aspect, an association relationship between one or more first triggering states and one or more SL PRS resources in the first information obtained by the first terminal device is the same as an association relationship between one or more first triggering states and one or more SL PRS resources in the first information obtained by the second terminal device.

In a possible implementation of the first aspect and the second aspect, the positioning measurement type includes that positioning measurement does not need to be reported.

Based on the foregoing solution, the first terminal device may indicate, to the second terminal device, that an SL PRS associated with the first triggering state does not need to be measured or reported by the second terminal device, so that transmission resources can be saved.

In a possible implementation of the first aspect and the second aspect, the indication information further includes one or more of the first triggering states, and the one or more first triggering states are associated with the reversely transmitted SL PRS.

Based on the foregoing solution, when indicating the second terminal device to reversely transmit the SL PRS, the first terminal device may recommend the SL PRS to the second terminal device.

In a possible implementation of the first aspect, the SL PRS resource associated with the one or more first triggering states indicated by the first control information is indicated by a network device, or is selected by the first terminal device.

In a possible implementation of the second aspect, the SLPRS resource associated with the one or more first triggering states indicated by the first control information is indicated by a network device, or is selected by the second terminal device.

Based on the foregoing solution, the first triggering state triggered by the first terminal device may be indicated by the network device, or may be selected by the first terminal device, so that interference to transmission of another terminal device can be reduced.

In a possible implementation of the first aspect and the second aspect, the first control information includes a first field, the first field indicates the one or more first triggering states, and the first information is further used to determine a quantity of bits of the first field in the first control information.

Based on the foregoing solution, the quantity of bits of the first field that is in the control information and that indicates the first triggering state may be further configured for the terminal device, to transmit the SL PRS.

In a possible implementation of the first aspect and the second aspect, the first information further includes one or more of the following: SL frequency information, BWP information, and resource pool information that correspond to each of one or more SL PRS resources associated with the first triggering states.

Based on the foregoing solution, one or more of the SL frequency information, the BWP information, and the resource pool information of the SL PRS resource are configured for the terminal by using the first information, so that SL PRS transmission across SL frequencies, BWPs, or resource pools can be supported.

Based on a possible implementation of the first aspect and the second aspect, the first information further includes information about sending time of the SL PRS resource corresponding to the one or more first triggering states. The information about the sending time is a time difference between receiving time of the SL PRS corresponding to the one or more first triggering states and receiving time of control information used for triggering the one or more first triggering states. Alternatively, the information about the sending time is a time difference between sending time of the SL PRS corresponding to the one or more first triggering states and sending time of control information used for triggering the one or more first triggering states.

Based on the foregoing solution, a time domain resource of each SL PRS is configured for the terminal device by using the first information, to transmit the SL PRS.

In a possible implementation of the first aspect and the second aspect, when a first subcarrier spacing of the SL PRS resource corresponding to the one or more first triggering states is different from a second subcarrier spacing of the control information used for triggering the one or more first triggering states, the time difference is based on a larger one in the first subcarrier spacing and the second subcarrier spacing, or the time difference is based on the first subcarrier spacing.

Based on the foregoing solution, because the subcarrier spacing of the SL PRS resource may be different from that of the control information, when the subcarrier spacing of the control information is different from the subcarrier spacing of the SL PRS resource, the sending time of the SL PRS may be determined in the foregoing two manners.

According to a third aspect, a communication apparatus is provided. The communication apparatus includes a processing unit and a transceiver unit.

The processing unit is configured to obtain first information. The first information includes one or more first triggering states and each of the one or more first triggering states is associated with one or more SL PRS resources. The transceiver unit is configured to send the second information to the second terminal device. The second information includes one or more positioning measurement types, and each of the one or more positioning measurement types is associated with the one or more first triggering states.

Optionally, the second information includes at least one of a receiving-sending time difference, a receiving-sending frequency difference, SL-RTOA, SL-TOA, SL-TDOA, SL-AOA, SL-ZOA, receive Doppler, a receive first-path phase, and that positioning measurement does not need to be reported. Each of the at least one of the receiving-sending time difference, the receiving-sending frequency difference, the SL-RTOA, the SL-TOA, the SL-TDOA, the SL-AOA, the SL-ZOA, the receive Doppler, the receive first-path phase, and that the positioning measurement does not need to be reported that are included in the second information is associated with the one or more first triggering states.

In a possible implementation, the positioning measurement type includes that the positioning measurement does not need to be reported.

In a possible implementation, the transceiver unit is further configured to send first control information to the second terminal device. The first control information indicates one or more of the first triggering states. The transceiver unit is further configured to send an SL PRS corresponding to an SL PRS resource associated with one or more of the first triggering states indicated by first control information.

In a possible implementation, the transceiver unit is further configured to receive third information from the second terminal device. The third information includes one or more measurement values, and the one or more measurement values correspond to the one or more positioning measurement types associated with one or more of the first triggering states indicated by the first control information.

In a possible implementation, the transceiver unit is further configured to send indication information to the second terminal device, where the indication information indicates to reversely transmit an SL PRS, and the reversely transmitted SL PRS is an SL PRS sent by the second terminal device.

In a possible implementation, the indication information further includes the one or more first triggering states, and the one or more first triggering states are associated with the reversely transmitted SL PRS.

In a possible implementation, the transceiver unit is further configured to receive third control information from the second terminal device. The third control information indicates the one or more first triggering states. The transceiver unit is further configured to receive an SL PRS corresponding to an SL PRS resource associated with the one or more first triggering states indicated by the third control information.

In a possible implementation, the transceiver unit is further configured to send second control information to the second terminal device, where the second control information indicates a format of the first control information.

In a possible implementation, the transceiver unit is further configured to send fourth information to the second terminal device. The fourth information includes one or more non-positioning measurement types, and each of the one or more non-positioning measurement types is associated with the one or more first triggering states. The non-positioning measurement type includes one or more of the following: serving network device information of a terminal device, absolute location information of the terminal device, or orientation information of the terminal device.

In a possible implementation, the transceiver unit is further configured to send fourth information to the second terminal device. The fourth information includes at least one of the following: serving network device information of the terminal device, absolute location information of the terminal device, and orientation information of the terminal device. Each of the at least one of the serving network device information of the terminal device, the absolute location information of the terminal device, and the orientation information of the terminal device that are included in the fourth information is associated with the one or more first triggering states.

In a possible implementation, the transceiver unit is further configured to receive fifth information from the second terminal device. The fifth information includes a value of the one or more non-positioning measurement types associated with the one or more first triggering states indicated by the first control information.

In a possible implementation, the SL PRS resource associated with the one or more first triggering states indicated by the first control information is indicated by a network device, or is selected by the first terminal device.

In a possible implementation, the first control information includes a first field, the first field indicates the one or more first triggering states, and the first information is further used to determine a quantity of bits of the first field in the first control information.

In a possible implementation, the first information further includes one or more of SL frequency information, BWP information, and resource pool information that correspond to each of the one or more SL PRS resources associated with the first triggering states.

In a possible implementation, the first information further includes information about sending time of an SL PRS resource corresponding to the one or more first triggering states. The information about the sending time is a time difference between receiving time of the SL PRS corresponding to the one or more first triggering states and receiving time of control information used for triggering the one or more first triggering states.

In a possible implementation, when a first subcarrier spacing of the SL PRS resource corresponding to the one or more first triggering states is different from a second subcarrier spacing of control information used for triggering the one or more first triggering states, the time difference is determined by a larger subcarrier spacing in the first subcarrier spacing and the second subcarrier spacing. Alternatively, the time difference is determined based on the first subcarrier spacing.

According to a fourth aspect, a communication apparatus is provided. The communication apparatus includes a processing unit and a transceiver unit.

The processing unit is configured to obtain first information. The first information includes one or more first triggering states, and each of the one or more first triggering states is associated with one or more SL PRS resources. The transceiver unit is configured to receive second information from a first terminal device. The second information includes one or more positioning measurement types, and each of the one or more positioning measurement types is associated with the one or more first triggering states.

Optionally, the second information includes at least one of a receiving-sending time difference, a receiving-sending frequency difference, SL-RTOA, SL-TOA, SL-TDOA, SL-AOA, SL-ZOA, receive Doppler, a receive first-path phase, and that positioning measurement does not need to be reported. Each of the at least one of the receiving-sending time difference, the receiving-sending frequency difference, the SL-RTOA, the SL-TOA, the SL-TDOA, the SL-AOA, the SL-ZOA, the receive Doppler, the receive first-path phase, and that the positioning measurement does not need to be reported that are included in the second information is associated with the one or more first triggering states.

In a possible implementation, the positioning measurement type includes that the positioning measurement does not need to be reported.

In a possible implementation, the transceiver unit is further configured to receive first control information from the first terminal device. The first control information indicates one or more of the first triggering states. The transceiver unit is further configured to receive an SL PRS corresponding to an SL PRS resource associated with the one or more first triggering states indicated by the first control information.

In a possible implementation, the transceiver unit is further configured to send third information to the first terminal device. The third information includes one or more measurement values, and the one or more measurement values correspond to the one or more positioning measurement types associated with one or more of the first triggering states indicated by the first control information.

In a possible implementation, the transceiver unit is further configured to receive indication information from the first terminal device. The indication information indicates to reversely transmit an SL PRS, and the reversely transmitted SL PRS is an SL PRS sent by the second terminal device.

In a possible implementation, the indication information further includes the one or more first triggering states, and the one or more first triggering states are associated with the reversely transmitted SL PRS.

In a possible implementation, the transceiver unit is further configured to send third control information to the first terminal device. The third control information indicates the one or more first triggering states. The transceiver unit is further configured to send an SL PRS corresponding to an SL PRS resource associated with one or more of the first triggering states indicated by the third control information.

In a possible implementation, the transceiver unit is further configured to receive second control information from the first terminal device, where the second control information indicates a format of the first control information.

In a possible implementation, the transceiver unit is further configured to receive fourth information from the first terminal device. The fourth information includes one or more non-positioning measurement types, and each of the one or more non-positioning measurement types is associated with the one or more first triggering states. The non-positioning measurement type includes one or more of the following: serving network device information of a terminal device, absolute location information of the terminal device, or orientation information of the terminal device.

In a possible implementation, the transceiver unit is further configured to receive fourth information from the first terminal device. The fourth information includes at least one of the following: serving network device information of the terminal device, absolute location information of the terminal device, and orientation information of the terminal device. Each of the at least one of the serving network device information of the terminal device, the absolute location information of the terminal device, and the orientation information of the terminal device that are included in the fourth information is associated with the one or more first triggering states.

In a possible implementation, the transceiver unit is further configured to send fifth information to the first terminal device. The fifth information includes a value of the one or more non-positioning measurement types associated with the one or more first triggering states indicated by the first control information.

In a possible implementation, the SL PRS resource associated with the one or more first triggering states indicated by the first control information is indicated by a network device, or is selected by the first terminal device.

In a possible implementation, the first control information includes a first field, the first field indicates the one or more first triggering states, and the first information is further used to determine a quantity of bits of the first field in the first control information.

In a possible implementation, the first information further includes one or more of SL frequency information, BWP information, and resource pool information that correspond to each of the one or more SL PRS resources associated with the first triggering states.

In a possible implementation, the first information further includes information about sending time of an SL PRS resource corresponding to the one or more first triggering states. The information about the sending time is a time difference between receiving time of the SL PRS corresponding to the one or more first triggering states and receiving time of control information used for triggering the one or more first triggering states.

In a possible implementation, when a first subcarrier spacing of the SL PRS resource corresponding to the one or more first triggering states is different from a second subcarrier spacing of control information used for triggering the one or more first triggering states, the time difference is determined by a larger subcarrier spacing in the first subcarrier spacing and the second subcarrier spacing. Alternatively, the time difference is determined based on the first subcarrier spacing.

According to a fifth aspect, an embodiment of this application provides a communication apparatus. The communication apparatus may be the communication apparatus according to any one of the third aspect and the fourth aspect in the foregoing embodiments, or a chip disposed in the communication apparatus according to any one of the third aspect and the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the communication device at the transmitting end or the communication device at the receiving end in the method embodiment according to any one of the first aspect and the second aspect.

It should be understood that the communication interface may be implemented by using an antenna, a feeder, a codec, or the like in the communication apparatus. Alternatively, if the communication apparatus is a chip disposed in a communication device at a transmitting end or a communication device at a receiving end, the communication interface may be an input/output interface of the chip, for example, an input/output pin. The communication apparatus may further include a transceiver, configured to perform communication between the communication apparatus and another device. For example, when the communication apparatus is a communication device at a transmitting end, the another device is a communication device at a receiving end; or when the communication apparatus is a communication device at a receiving end, the another device is a communication device at a transmitting end.

According to a sixth aspect, this application provides a communication apparatus, including a logic circuit and an input/output interface.

For example, the logic circuit is configured to obtain the first information. The first information includes one or more first triggering states, and each of the one or more first triggering states is associated with one or more SL PRS resources. The input/output interface is configured to output the second information to the second terminal device. The second information includes one or more positioning measurement types, and each of the one or more positioning measurement types is associated with the one or more first triggering states.

For example, the logic circuit is configured to obtain the first information. The first information includes one or more first triggering states, and each of the one or more first triggering states is associated with one or more SL PRS resources. The input/output interface is configured to input the second information. The second information includes one or more positioning measurement types, and each of the one or more positioning measurement types is associated with the one or more first triggering states.

According to a seventh aspect, an embodiment of this application provides a chip system. The chip system includes a processor, and may further include a memory, configured to implement the method performed by the communication apparatus according to any one of the third aspect and the fourth aspect. In a possible implementation, the chip system further includes a memory, configured to store program instructions and/or data. The chip system may include a chip, or may include the chip and another discrete device.

According to an eighth aspect, an embodiment of this application provides a communication system. The communication system includes the communication apparatus in the third aspect and the fourth aspect.

According to a ninth aspect, this application provides a computer-readable storage medium. The computer-readable storage medium stores a computer program or instructions. When the computer program or the instructions are run, the method performed by the communication device at the receiving end in the foregoing aspects is implemented, or the method performed by the communication device at the transmitting end in the foregoing aspects is implemented.

According to a tenth aspect, a computer program product is provided. The computer program product includes computer program code or instructions. When the computer program code or the instructions are run, the method performed by the communication device at a receiving end in the foregoing aspects is implemented, or the method performed by the communication device at a transmitting end in the foregoing aspects is implemented.

For beneficial effects of the second aspect to the tenth aspect and the implementations of the second aspect to the fourth aspect, refer to descriptions of beneficial effects of the method in the first aspect and the implementations of the first aspect.

### BRIEF DESCRIPTION OF DRAWINGS

FIG. 1 is a diagram of a V2X communication system;
FIG. 2 shows an SL CSI triggering procedure;
FIG. 3 is a diagram of a communication system according to an embodiment of this application;
FIG. 4 is an example flowchart of an SL PRS parameter configuration method according to an embodiment of this application;
FIG. 5 is a diagram of sending time of an SL PRS according to an embodiment of this application;
FIG. 6 is an example flowchart of an SL PRS parameter configuration method according to an embodiment of this application;
FIG. 7 is an example flowchart of an SL PRS parameter configuration method according to an embodiment of this application;
FIG. 8 is a diagram of a communication apparatus according to an embodiment of this application;
FIG. 9 is a diagram of a communication apparatus according to an embodiment of this application;
FIG. 10 is a diagram of a communication apparatus according to an embodiment of this application; and
FIG. 11 is a diagram of a communication apparatus according to an embodiment of this application.

### DESCRIPTION OF EMBODIMENTS

The following explains and describes technical terms in embodiments of this application.
(1) A triggering state (triggering state) may be understood as indication information associated with an SL PRS resource, and refers to a field or a bit used to trigger or indicate the associated SL PRS resource. It should be understood that the indication information associated with the SL PRS resource may also be referred to as an index or indication information. A name of the indication information is not specifically limited in this application. In embodiments of this application, the triggering state is used as an example for description.
(2) A positioning measurement type may also be referred to as a positioning measurement quantity, a positioning measurement quantity type, a positioning measurement report type, or a positioning measurement report type, and refers to a type of information obtained depending on reference signal measurement, for example, a type of information obtained depending on SLPRS measurement, for example, a receiving-sending time difference, a receiving-sending frequency difference, or an SL-TDOA.
(3) A non-positioning measurement type, also referred to as a report type, a non-positioning measurement report type, a non-positioning measurement quantity, a non-positioning measurement quantity type, or a non-positioning measurement report type, is a type of information obtained without depending on reference signal measurement, for example, a type of information obtained without depending on SL PRS measurement, for example, orientation information of a terminal device.
(4) An SL PRS resource refers to a resource used to send an SL PRS. It should be understood that, in embodiments of this application, sending the SL PRS may also be replaced with sending the SL PRS resource, and it may be understood as that the SL PRS is sent on the SL PRS resource.

The following explains and describes the technical solutions provided in embodiments of this application with reference to the accompanying drawings.

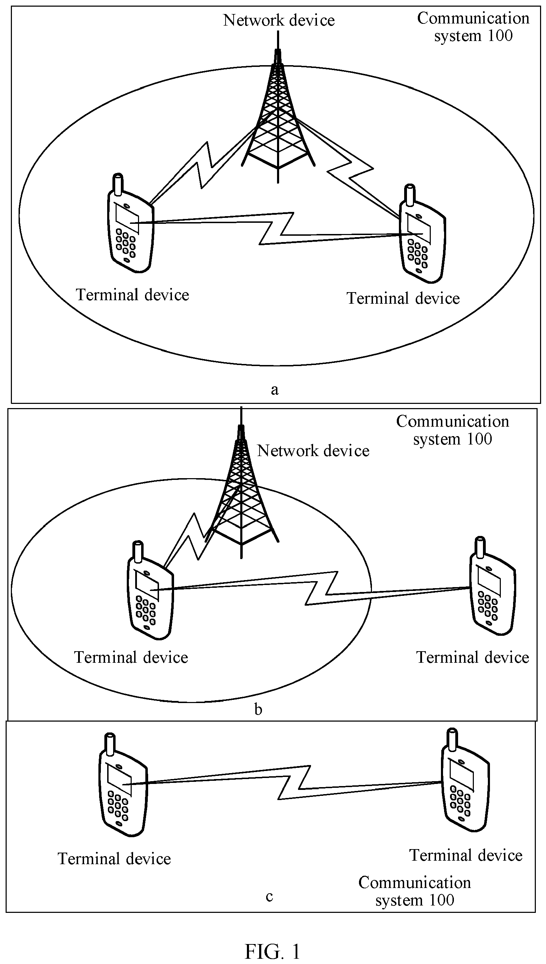

In a new radio technology (new radio technology, NR) system, an NR SL air interface is proposed to support a vehicle to everything (vehicle to everything, V2X) technology. FIG. 1 is a diagram of a V2X communication system 100. FIG. 1 shows an architecture in coverage of a network device. A prose communication 5 (prose communication 5, PC5) connection is established between terminal devices, and each terminal device establishes a connection to the network device. It should be understood that the terminal devices may be connected to a same network device or may be connected to different network devices. In a in FIG. 1, an example in which the terminal devices are connected to the same network device is used for illustration. b in FIG. 1 shows an architecture in partial coverage of a network device. A PC5 connection is established between terminal devices, some terminal devices do not establish connections to the network device, and remaining terminal devices establish connections to the network device, c in FIG. 1 shows an architecture in outside coverage of a network device. A PC5 connection is established between terminal devices, and no terminal device establishes a connection to the network device.

It may be understood that in FIG. 1, two terminal devices and one network device are used as an example for description. The communication system may further include more terminal devices and network devices.

The following describes a sidelink channel state information (channel state information, CSI) triggering procedure.

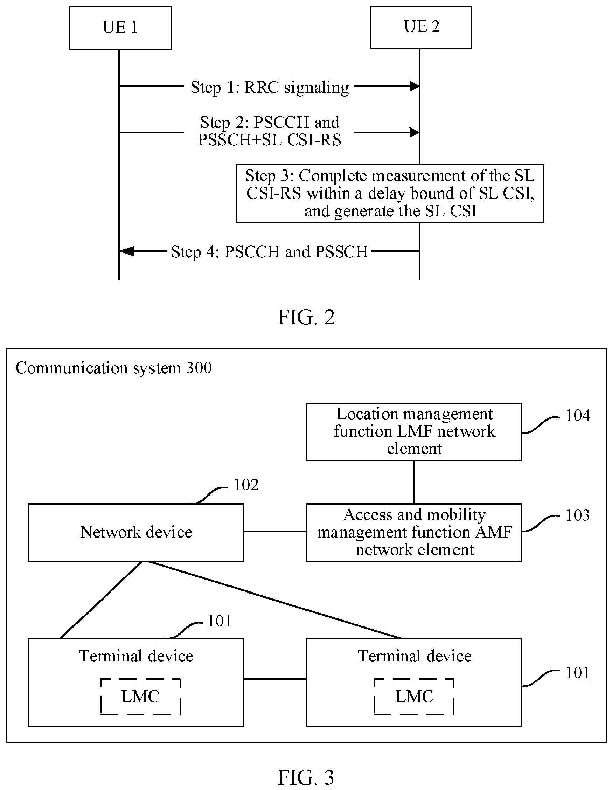

FIG. 2 shows an SL CSI triggering procedure. As shown in FIG. 2, SL CSI reporting between terminal devices involves only communication between two terminal devices. For ease of description, the two terminal devices are respectively referred to as UE 1 and UE 2. The UE 1 expects to obtain SL CSI obtained by the UE 2 by measuring an SL CSI reference signal (reference signal, RS). The triggering procedure includes the following steps.

Step 1: The UE 1 sends PC5 radio resource control (radio resource control, RRC) signaling to the UE 2.

The PC5 RRC signaling may be understood as RRC signaling at a PC5 protocol layer. The PC5 RRC signaling includes configuration information of the SL CSI-RS and configuration information of the SL CSI. The configuration information of the SL CSI-RS includes a quantity of ports of the SL CSI-RS, an intra-slot symbol index, and a resource element (resource element, RE) index in a resource block (resource block, RB) on a symbol. Optionally, the configuration information of the SL CSI-RS does not include a slot or a bandwidth of the SL CSI-RS. A main reason is that the SL CSI-RS needs to be sent on a sub-channel included in a physical sidelink shared channel (physical sidelink shared channel, PSSCH), in other words, the slot and the bandwidth that are occupied by the SL CSI-RS are the same as a slot and a bandwidth that are occupied by the PSSCH. Therefore, a configuration may be omitted. In addition, the configuration information that is of the SL CSI and that is included in the PC5 RRC signaling may include a delay bound (delay bound) of the SL CSI. The delay bound of the SL CSI indicates measurement of the SL CSI-RS and reporting duration of the SL CSI.

Step 2: The UE 1 sends a physical sidelink control channel (physical sidelink control channel, PSCCH), the PSSCH, and the SL CSI-RS to the UE 2.

The PSCCH carries 1^{st} stage SCI (1^{st} stage SCI, SCI format 1-A), indicating scheduling information of the PSSCH and reservation information of the PSCCH. The scheduling information of the PSSCH includes a bandwidth of the sub-channel included in the PSSCH, and the sub-channel included in the PSSCH is used to carry the SL CSI-RS. The PSSCH carries 2^{nd} stage SCI (2^{nd} stage SCI, SCI format 2-A/2-B) and an SL-shared channel (shared channel, SCH) payload. The 2^{nd} stage SCI indicates information about the SL-SCH payload and a feedback indication for SL-SCH demodulation.

The 2^{nd} stage SCI may further trigger receiving of the SL CSI-RS, to be specific, indicate the UE 2 to receive the SL CSI-RS. When a CSI request (CSIrequest) field in the 2^{nd} stage SCI received by the UE 2 is set to 1, the UE 2 receives the SL CSI-RS in the slot in which the PSSCH is located, and a receiving bandwidth is the same as the bandwidth corresponding to the sub-channel included in the PSSCH indicated by the 1^{st} stage SCI.

Step 3: The UE 2 completes measurement of the SL CSI-RS within the delay bound of the SL CSI, and generates an SL CSI report (SL CSI report).

Step 4: The UE 2 sends the PSCCH and the PSSCH to the UE 1.

The SL-SCH payload in the PSSCH carries the SL CSI report. Specifically, the SL CSI report is carried in a media access control (media access control, MAC) control element (control element, CE) in the SL-SCH payload.

It can be learned from FIG. 2 that the SL CSI-RS and the PSSCH are sent together. Therefore, the SL CSI-RS and the PSSCH have a same bandwidth and slot. A current communication system does not support transmission of a PRS between terminal devices, in other words, a problem of how to configure an SL PRS has not been resolved currently. Therefore, in a sidelink, positioning cannot be performed between the terminal devices based on the PRS. If it is considered that a configuration manner of the SL PRS between the terminal devices directly uses a configuration manner of the SL CSI-RS, a problem may exist. For example, when the SL PRS and the PSSCH are sent together and the SL PRS and the PSSCH have a same bandwidth and slot, that the SL PRS and the PSSCH are sent together and the SL PRS and the PSSCH have a same bandwidth and slot cannot be flexibly applied to a plurality of communication scenarios. For example, this manner is not applicable to a communication scenario with a large reference signal bandwidth and a small data service.

To better resolve the problem of configuring the SL PRS, embodiments of this application provide a sidelink positioning reference signal SL PRS parameter configuration method. FIG. 3 is a diagram of a communication system according to an embodiment of this application. The communication system 300 may include a terminal device 101, a network device 102, an access and mobility management function (access and mobility management function, AMF) network element 103, and a location management function (location management function, LMF) network element 104.

The terminal device may also be referred to as user equipment (user equipment, UE), a mobile station (mobile station, MS), a mobile terminal (mobile terminal, MT) device, or the like, and is a device that provides voice and/or data connectivity for a user. For example, the terminal device may include a handheld device or a vehicle-mounted device that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal device in industrial control (industrial control), a wireless terminal device in self-driving (self-driving), a wireless terminal device in remote medical surgery (remote medical surgery), a wireless terminal device in a smart grid (smart grid), a wireless terminal device in transportation safety (transportation safety), a wireless terminal device in a smart city (smart city), or a wireless terminal device in a smart home. The network device may also be a device to which a next generation communication protocol is applied, for example, 6G. In FIG. 1, the terminal device is shown by using the UE. This is merely used as an example, and does not constitute a limitation on the terminal device. An example in which the terminal device in embodiments of this application is a terminal is used for description.

The network device may also be referred to as an access network (access network, AN) device, and provides a wireless access service for the terminal device. The access network device is a device that enables the terminal device to access a wireless network in the communication system. The access network device is a node in a radio access network, and may also be referred to as the network device, or may be referred to as a radio access network (radio access network, RAN) node (or device). Currently, some examples of the access network device are: a next generation NodeB (next generation NodeB, gNB), a transmission reception point (transmission reception point, TRP), a transmission point (transmission point, TP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device may also be a device to which a next generation communication protocol is applied, for example, 6G.

The access and mobility management function AMF network element may be configured to manage access control and mobility of the terminal device. During actual application, the access and mobility management function network element includes a mobility management function in a mobility management entity (mobility management entity, MME) in a long term evolution (long term evolution, LTE) network framework, and an access management function is added. The access and mobility management function network element may be specifically responsible for registration, mobility management, reachability detection, selection of a session management function network element, mobility state transition management, and the like of the terminal device. For example, in 5G, the access and mobility management function network element may be an AMF network element, for example, as shown in FIG. 3. In future communication, for example, 6G, the access and mobility management function network element may still be the AMF network element or have another name. This is not limited in this application. When the access and mobility management function network element is the AMF network element, the AMF may provide a 5G mobility management service (Namf), for example, a 5G communication service (Namf_Communication).

The location management function LMF network element may be configured to: determine a location of the UE, obtain downlink location measurement or location estimation from the UE, and the like. For example, in 5G, the location management function LMF network element is shown in FIG. 3. In a future communication system, for example, 6G, the location management function network element may still be an LMF network element or have another name. This is not limited in this application.

Optionally, the terminal device may include a location management component (location management component, LMC). The LMC is a component or an application that is deployed on the terminal device and that has some LMF functions, and is configured to support a positioning service of a PC5 interface.

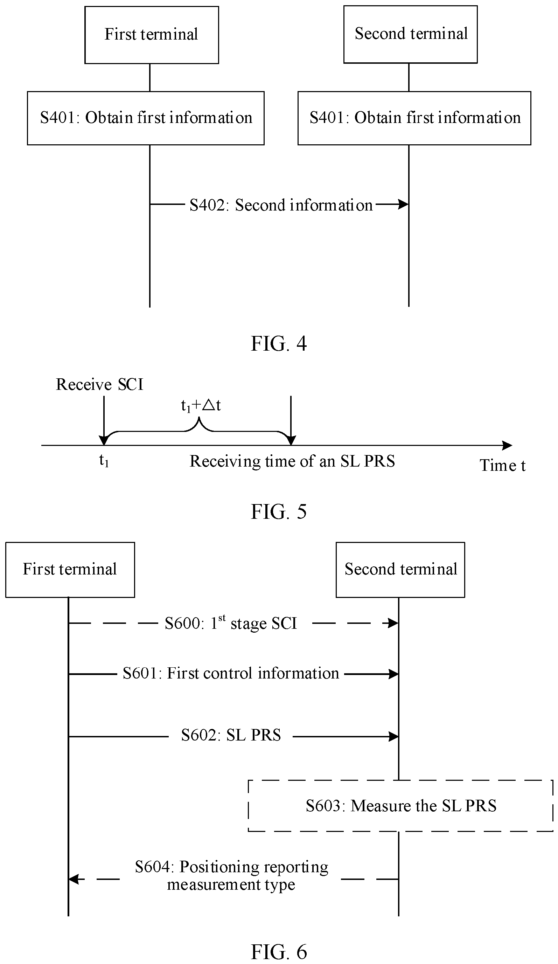

FIG. 4 is an example flowchart of an SL PRS parameter configuration method according to an embodiment of this application. The method may include the following operations.

S401: A first terminal obtains first information.

Similarly, a second terminal may also obtain the first information. The first information herein may include one or more first triggering states. Each first triggering state is associated with one or more SL PRS resources. The SL PRS resource herein may be understood as a time-frequency resource used to transmit an SL PRS, or may also be understood as configuration information of the SLPRS.

In a possible case, the first terminal may obtain the first information from a network device. For example, the network device may send the first information to the first terminal in a unicast, broadcast, or multicast manner. For example, the network device may send the first information to the first terminal by using RRC signaling, for example, an RRC reconfiguration (RRC reconfiguration). Alternatively, the network device may send the first information to the first terminal by using system information, for example, a master information block (master information block, MIB) or a system information block (system information block, SIB).

In another possible case, the first information may be configured in the first terminal in a preconfiguration form. For example, during factory configuration of the first terminal, the first information may be configured in the first terminal.

Similarly, the second terminal may also obtain the first information in the foregoing possible manner.

S402: The first terminal sends second information to the second terminal.

Correspondingly, the second terminal receives the second information.

For example, the first terminal may send PC5 RRC signaling to the second terminal, where the PC5 RRC signaling may carry the second information. The second information may include one or more positioning measurement types. Each of the one or more positioning measurement types is associated with the one or more first triggering states in S401. The positioning measurement type may be understood as a positioning-related measurement type that the first terminal wants the second terminal to feed back. For example, the positioning measurement type may include at least one of a receiving-sending time difference, a receiving-sending frequency difference, SL-RTOA, SL-TOA, an SL-TDOA, an SL-AOA, an SL-ZOA, receive Doppler, or a receive first-path phase.

In a possible case, the first terminal may configure different positioning measurement types for different first triggering states. For example, the first terminal may configure one or more positioning measurement types for each first triggering state. In other words, one first triggering state is associated with one or more positioning measurement types. Positioning measurement types associated with all first triggering states may be the same or may be different. In another possible case, the first terminal may allocate a same positioning measurement type to all first triggering states. In other words, positioning measurement types associated with all first triggering states are the same. Each first triggering state may be associated with one or more positioning measurement types.

Optionally, the positioning measurement type may include that positioning measurement does not need to be reported. In other words, the second terminal does not need to perform positioning measurement feedback based on the SL PRS. In a possible case, when the terminal device allocates a same positioning measurement type to all first triggering states, the first terminal may allocate, to some first triggering states, the type indicating that positioning measurement does not need to be reported, and allocate a same positioning measurement type to remaining first triggering states other than the some first triggering states. In other words, positioning measurement types associated with the first triggering states other than the first triggering state to which the type indicating that positioning measurement does not need to be reported is allocated are the same. Based on the foregoing solution, the first terminal may indicate, to the second terminal, that an SL PRS associated with the first triggering state does not need to be measured or reported by the second terminal device, so that transmission resources can be saved.

In a possible case, the first terminal may send fourth information to the second terminal. The fourth information may include one or more non-positioning measurement types. For example, the first terminal may configure different non-positioning measurement types for different first triggering states. For example, the first terminal may configure one or more non-positioning measurement types for each first triggering state. In other words, one first triggering state is associated with one or more non-positioning measurement types. For example, the first terminal may allocate a same non-positioning measurement type to all first triggering states. In other words, non-positioning measurement types associated with all first triggering states are the same. Each first triggering state may be associated with one or more non-positioning measurement types.

Optionally, the non-positioning measurement type may include one or more of the following:
(1) serving network device information of a terminal, for example, identification information of a serving network device and/or location information of the serving network device;
(2) absolute location information of the terminal, for example, longitude and latitude information and/or altitude information of the terminal, where the terminal may determine the absolute location information by using a technology such as a global positioning system (global positioning system, GPS) or a BeiDou navigation satellite system (BeiDou navigation satellite system, BDS); and
(3) orientation information of the terminal, where the terminal may determine the orientation information by using a device such as a compass and/or a gyroscope.

It may be understood that the second information and the fourth information may be sent by using one piece of signaling, for example, RRC signaling. Alternatively, the second information and the fourth information may be separately sent by using different signaling. For example, the second information may be sent to the second terminal by using first RRC signaling, the fourth information may be sent to the second terminal by using second RRC signaling, and the first RRC signaling and the second RRC signaling are different signaling.

It should be noted that when the second information and the fourth information are sent by using different signaling, the fourth information may be sent before the second information is sent, or the fourth information may be sent after the second information is sent. This is not specifically limited in this application.

In the solution shown in FIG. 4, the first information may be shared by a plurality of terminals, in other words, the plurality of terminals have the same first information. In S402, the second information may be information that is determined by the first terminal for the second terminal and that cannot be sensed by another terminal. Based on the foregoing S401 and S402, an SL PRS associated with a same first triggering state may be configured for the plurality of terminals, and the first terminal configures a positioning measurement type for the second terminal, so that an SL PRS parameter is configured, and transmission of the SL PRS can be supported.

Optionally, when the first terminal and the second terminal transmit the SL PRS, the another terminal may obtain a first triggering state triggered by the first terminal and the second terminal, to determine an SL PRS resource occupied by the first terminal and the second terminal. Therefore, the another terminal may avoid selecting or using the SL PRS resource occupied by the first terminal and the second terminal, so that interference on the SL PRS between the first terminal and the second terminal is reduced.

The following describes the first information in S401 in detail.

In a possible implementation, the first information may be indicated by using a triggering state association table. The triggering state association table may include a first triggering state and an SL PRS resource triggered or indicated by each first triggering state, where the first triggering state may be used to trigger or indicate the SL PRS resource. The following describes the triggering state association table in detail with reference to Table 1.

**Table 1: Example of the triggering state association table**

| First triggering state (triggering state) | SL PRS resource (SL PRS resource) |
|---|---|
| 00 | No triggering (no triggering) |
| 01 | SL PRS resource #0 |
| 10 | SL PRS resource #0 |
| 11 | SL PRS resource #1 |

It can be learned from Table 1 that, when the first triggering state is 00, it may be considered that the first triggering state does not trigger any SL PRS resource, or that the first triggering state "00" is not associated with any SL PRS resource. When the first triggering state is 01, it may be considered that the SL PRS resource #0 is triggered, in other words, the first triggering state "01" is associated with the SL PRS resource #0. When the first triggering state "01" is triggered, the SL PRS resource #0 may be transmitted between terminals, for example, between the first terminal and the second terminal. In other words, an SL PRS resource corresponding to a first triggering state may be determined based on a value corresponding to the first triggering state. Other cases are deduced by analog. Table 1 shows the first triggering state and one or more SL PRS resources associated with each first triggering state.

It should be noted that Table 1 does not constitute any limitation on the triggering state association table. That the first triggering state in Table 1 is 2 bits (bits) is used as an example. Actually, the first triggering state may be represented by more bits, for example, 3 bits, 4 bits, or 5 bits. A larger quantity of bits used for the first triggering state indicates a larger quantity of first triggering states that can be indicated. For example, when the quantity of bits used for the first triggering state is 2, four first triggering states may be indicated; or when the quantity of bits used for the first triggering state is 3, eight first triggering states may be indicated.

Optionally, the first information may further include at least one of the following 1 to 4. For example, the triggering state association table may further include at least one of the following 1 to 4.
1. SL frequency information, for example, a frequency value of an SL frequency: The SL frequency may also be referred to as an SL communication frequency. The SL frequency may be a center frequency, a maximum frequency value, or a minimum frequency value at which the first terminal communicates with another terminal, for example, the second terminal. The first information may include SL frequency information of one or more SL frequencies to which an SL PRS resource associated with a first triggering state belongs. For example, the first information may include SL frequency information of one or more SL frequencies to which the SL PRS resource #0 and the SL PRS resource #1 shown in Table 1 belong.

For example, if SL PRS resources associated with all the first triggering states belong to a same SL frequency, to save transmission resources, the first information may not include the SL frequency information. Optionally, the first terminal and the second terminal may transmit the SL PRS by using an SL communication frequency allocated by the network device.

If a plurality of SL PRS resources belong to different SL frequencies, the first information may include SL frequency information of the SL frequencies to which the SL PRS resources belong, and the terminal may determine SL frequency information of each SL PRS resource, so that the SL PRS resource can be sent on a corresponding SL frequency. In a possible case, the plurality of SL PRS resources may be the SL PRS resources associated with one first triggering state. For example, the plurality of SL PRS resources include the SL PRS resource #0, the SL PRS resource #1, and an SL PRS resource #2, and one first triggering state "1" may be associated with the three SL PRS resources: the SL PRS resource #0, the SL PRS resource #1, and the SL PRS resource #2. In another possible case, the plurality of SL PRS resources may be SL PRS resources associated with a plurality of first triggering states. For example, if the plurality of SL PRS resources include the SL PRS resource #0, the SL PRS resource #1, and an SL PRS resource #2, a first triggering state "0" is associated with the SL PRS resource #0, a first triggering state "1" is associated with the SL PRS resource #1, and a first triggering state "2" is associated with the SL PRS resource #2.

For example, it is assumed that SL PRS resources associated with one or more first triggering states include the SL PRS resource #0, the SL PRS resource #1, the SL PRS resource #2, and an SL PRS resource #3, where the SL PRS resource #0, the SL PRS resource #1, and the SL PRS resource #2 belong to an SL frequency 1, and the SL PRS resource #3 belongs to an SL frequency 2. In this case, the first information may include SL frequency information of the SL frequency 1 to which the SL PRS resource #0, the SL PRS resource #1, and the SL PRS resource #2 belong, and SL frequency information of the SL frequency 2 to which the SL PRS resource #3 belongs.

It may be understood that the first information may include a correspondence between each SL PRS resource and SL frequency information of an SL frequency to which the SL PRS resource belongs. For example, the first information may include a correspondence between the SL PRS resource #0 and the SL frequency information of the SL frequency 1, a correspondence between the SL PRS resource #1 and the SL frequency information of the SL frequency 1, .... Alternatively, the first information may include a correspondence between a plurality of SL PRS resources belonging to a same SL frequency and SL frequency information of the SL frequency to which the plurality of SL PRS resources belong. For example, the first information may include a correspondence between the SL PRS resource #0, the SL PRS resource #1, and the SL PRS resource #2 and the SL frequency information of the SL frequency 1, and the first information includes a correspondence between the SL PRS resource #3 and the SL frequency information of the SL frequency 2.

2. Bandwidth part (bandwidth part, BWP) information, for example, a BWP index and/or a physical resource block (physical resource block, PRB) index included in a BWP: Optionally, one SL frequency may correspond to one or more pieces of BWP information. In other words, BWPs corresponding to the one or more pieces of BWP information have a same center frequency, a same maximum frequency value, or a same minimum frequency value. The first information may include BWP information of one or more BWPs to which an SL PRS resource associated with a first triggering state belongs. For example, the first information may include BWP information of one or more BWPs to which the SL PRS resource #0 and the SL PRS resource #1 shown in Table 1 belong. Optionally, if a plurality of SL PRS resources belong to a plurality of BWPs, the plurality of BWPs may correspond to one SL frequency, or may correspond to a plurality of SL frequencies. In a possible case, the plurality of SL PRS resources may be SL PRS resources associated with one first triggering state. For example, the plurality of SL PRS resources include the SL PRS resource #0, the SL PRS resource #1, and an SL PRS resource #2, and one first triggering state "1" may be associated with the three SL PRS resources: the SL PRS resource #0, the SL PRS resource #1, and the SL PRS resource #2. In another possible case, the plurality of SL PRS resources may be SL PRS resources associated with a plurality of first triggering states. For example, if the plurality of SL PRS resources include the SL PRS resource #0, the SL PRS resource #1, and an SL PRS resource #2, a first triggering state "0" is associated with the SL PRS resource #0, a first triggering state "1" is associated with the SL PRS resource #1, and a first triggering state "2" is associated with the SL PRS resource #2.

For example, if SL PRS resources associated with all the first triggering states belong to a same BWP, to save transmission resources, the first information may not include the BWP information.

If the plurality of SL PRS resources belong to different BWPs, the first information may include BWP information of the BWPs to which the SL PRS resources belong. In a possible case, the plurality of SL PRS resources may be SL PRS resources associated with one first triggering state. For example, the plurality of SL PRS resources include the SL PRS resource #0, the SL PRS resource #1, and an SL PRS resource #2, and one first triggering state "1" may be associated with the three SL PRS resources: the SL PRS resource #0, the SL PRS resource #1, and the SL PRS resource #2. In another possible case, the plurality of SL PRS resources may be SL PRS resources associated with a plurality of first triggering states. For example, if the plurality of SL PRS resources include the SL PRS resource #0, the SL PRS resource #1, and an SL PRS resource #2, a first triggering state "0" is associated with the SL PRS resource #0, a first triggering state "1" is associated with the SL PRS resource #1, and a first triggering state "2" is associated with the SL PRS resource #2.

For example, it is assumed that SL PRS resources associated with one or more first triggering states the SL PRS resource #0, the SL PRS resource #1, the SL PRS resource #2, and an SL PRS resource #3, where the SL PRS resource #0, the SL PRS resource #1, and the SL PRS resource #2 belong to a BWP 1, and the SL PRS resource #3 belongs to a BWP 2. In this case, the first information may include BWP information of the BWP 1 to which the SL PRS resource #0, the SLPRS resource #1, and the SLPRS resource #2 belong, and BWP information of the BWP 2 to which the SL PRS resource #3 belongs.

It may be understood that the first information may include a correspondence between each SL PRS resource and BWP information of a BWP to which the SL PRS resource belongs. For example, the first information may include a correspondence between the SLPRS resource #0 and the BWP information of the BWP 1, a correspondence between the SL PRS resource #1 and the BWP information of the BWP 1, .... Alternatively, the first information may include a correspondence between a plurality of SL PRS resources belonging to a same BWP and BWP information of the BWP to which the plurality of SL PRS resources belong. For example, the first information may include a correspondence between the SL PRS resource #0, the SL PRS resource #1, and the SL PRS resource #2 and the BWP information of the BWP 1, and the first information includes a correspondence between the SL PRS resource #3 and the BWP information of the BWP 2.

3. Resource pool information, for example, an index of a resource pool and/or a PRB index included in the resource pool: One BWP may include one or more resource pools, and each resource pool may include one or more PRBs.

In an example, the resource pool may include an SL PRS resource, indicating that the first terminal may transmit an SL PRS in the resource pool. The first information may include resource pool information of a resource pool to which an SL PRS resource associated with a first triggering state belongs.

For example, if SL PRS resources associated with all the first triggering states belong to a same resource pool, to save transmission resources, the first information may not include the resource pool information.

If a plurality of SL PRS resources belong to different resource pools, the first information may include resource pool information of the resource pools to which the SL PRS resources belong. In a possible case, the plurality of SL PRS resources may be SL PRS resources associated with one first triggering state. For example, the plurality of SL PRS resources include the SL PRS resource #0, the SL PRS resource #1, and an SL PRS resource #2, and one first triggering state " 1" may be associated with the three SL PRS resources: the SL PRS resource #0, the SL PRS resource #1, and the SL PRS resource #2. In another possible case, the plurality of SL PRS resources may be SL PRS resources associated with a plurality of first triggering states. For example, if the plurality of SL PRS resources include the SLPRS resource #0, the SL PRS resource #1, and an SL PRS resource #2, a first triggering state "0" is associated with the SL PRS resource #0, a first triggering state " 1" is associated with the SL PRS resource #1, and a first triggering state "2" is associated with the SL PRS resource #2.

For example, it is assumed that SL PRS resources associated with one or more first triggering states include the SL PRS resource #0, the SL PRS resource #1, the SL PRS resource #2, and an SL PRS resource #3, where the SL PRS resource #0, the SL PRS resource #1, and the SLPRS resource #2 belong to a resource pool 1, and the SLPRS resource #3 belongs to a resource pool 2. In this case, the first information may include resource pool information of the resource pool 1 to which the SL PRS resource #0, the SL PRS resource #1, and the SL PRS resource #2 belong, and resource pool information of the resource pool 2 to which the SL PRS resource #3 belongs.

It may be understood that the first information may include a correspondence between each SL PRS resource and resource pool information of a resource pool to which the SL PRS resource belongs. For example, the first information may include a correspondence between the SL PRS resource #0 and the resource pool information of the resource pool 1, a correspondence between the SL PRS resource #1 and the resource pool information of the resource pool 1, .... Alternatively, the first information may include a correspondence between a plurality of SL PRS resources belonging to a same resource pool and resource pool information of the resource pool to which the plurality of SL PRS resources belong. For example, the first information may include a correspondence between the SL PRS resource #0, the SL PRS resource #1, and the SL PRS resource #2 and the resource pool information of the resource pool 1, and the first information includes a correspondence between the SL PRS resource #3 and the resource pool information of the resource pool 2.

Optionally, the SL PRS resource associated with the first triggering state in S401, for example, the SL PRS resource #0 and the SL PRS resource #1 shown in Table 1, may belong to one or more resource pools. For example, if the SL PRS resource #0 belongs to the resource pool 1, and the SL PRS resource #1 belongs to the resource pool 1, it may be considered that the two resources belong to a same resource pool. If the SL PRS resource #0 belongs to the resource pool 1, and the SL PRS resource #1 belongs to the resource pool 2, it may be considered that the two resources belong to a plurality of resource pools. Optionally, if SL PRS resources associated with one first triggering state belong to a plurality of resource pools, the plurality of resource pools may belong to one BWP, or may belong to a plurality of BWPs. In other words, the plurality of resource pools may belong to one SL frequency, or may belong to a plurality of SL frequencies.

In another example, the resource pool may further include one or more SL PRS resource sets, and each SL PRS resource set may include one or more SL PRS resources. The first information may further include information about an SL PRS resource set to which an SL PRS resource associated with a first triggering state belongs, for example, information about an SL PRS resource set to which the SLPRS resource #0 and the SLPRS resource #1 shown in Table 1 belong. It should be understood that, if one first triggering state is associated with a plurality of SL PRSs, the plurality of SL PRSs may belong to a same SL PRS resource set, or may belong to different SL PRS resource sets.

For example, if SL PRS resources associated with all the first triggering states belong to a same resource set, to save transmission resources, the first information may not include information about the resource set.

If a plurality of SL PRS resources belong to different resource set, the first information may include information about the resource sets to which the SL PRS resources belong. In a possible case, the plurality of SL PRS resources may be SL PRS resources associated with one first triggering state. For example, the plurality of SL PRS resources include the SL PRS resource #0, the SL PRS resource #1, and an SL PRS resource #2, and one first triggering state " 1" may be associated with the three SL PRS resources: the SL PRS resource #0, the SL PRS resource #1, and the SL PRS resource #2. In another possible case, the plurality of SL PRS resources may be SL PRS resources associated with a plurality of first triggering states. For example, if the plurality of SL PRS resources include the SL PRS resource #0, the SL PRS resource #1, and an SL PRS resource #2, a first triggering state "0" is associated with the SL PRS resource #0, a first triggering state "1" is associated with the SL PRS resource #1, and a first triggering state "2" is associated with the SL PRS resource #2.

For example, it is assumed that SL PRS resources associated with one or more first triggering states include the SL PRS resource #0, the SL PRS resource #1, the SL PRS resource #2, and an SL PRS resource #3, where the SL PRS resource #0, the SL PRS resource #1, and the SL PRS resource #2 belong to a resource set 1, and the SL PRS resource #3 belongs to a resource set 2. In this case, the first information may include resource set information of the resource set 1 to which the SL PRS resource #0, the SL PRS resource #1, and the SL PRS resource #2 belong, and resource set information of the resource set 2 to which the SL PRS resource #3 belongs.

It may be understood that the first information may include a correspondence between each SLPRS resource and resource set information of a resource set to which the SL PRS resource belongs. For example, the first information may include a correspondence between the SL PRS resource #0 and the resource set information of the resource set 1, a correspondence between the SL PRS resource #1 and the resource set information of the resource set 1, .... Alternatively, the first information may include a correspondence between a plurality of SL PRS resources belonging to a same resource set and resource set information of the resource set to which the plurality of SL PRS resources belong. For example, the first information may include a correspondence between the SLPRS resource #0, the SLPRS resource #1, and the SLPRS resource #2 and the resource set information of the resource set 1, and the first information includes a correspondence between the SL PRS resource #3 and the resource set information of the resource set 2.

In still another example, the resource pool may further include one or more SL PRS configurations, and each SL PRS configuration may include one or more SL PRS resource sets. The first information may further include information about an SL PRS configuration to which an SL PRS resource associated with a first triggering state belongs, for example, information about an SL PRS configuration to which the SL PRS resource #0 and the SL PRS resource #1 shown in Table 1 belong. It should be understood that, if one first triggering state is associated with a plurality of SL PRS resources, the plurality of SL PRS resources may belong to a same SL PRS configuration, or may belong to different SL PRS configurations.

For example, if SL PRS resources associated with all the first triggering states belong to a same SL PRS configuration, the first information may not include information about the SL PRS configuration.

If the plurality of SL PRS resources belong to different SL PRS configurations, the first information may include information about the SL PRS configurations to which the SL PRS resources belong. In a possible case, the plurality of SL PRS resources may be SL PRS resources associated with one first triggering state. For example, the plurality of SL PRS resources include the SL PRS resource #0, the SL PRS resource #1, and an SL PRS resource #2, and one first triggering state "1" may be associated with the three SL PRS resources: the SL PRS resource #0, the SL PRS resource #1, and the SL PRS resource #2. In another possible case, the plurality of SL PRS resources may be SL PRS resources associated with a plurality of first triggering states. For example, if the plurality of SL PRS resources include the SLPRS resource #0, the SL PRS resource #1, and an SL PRS resource #2, a first triggering state "0" is associated with the SL PRS resource #0, a first triggering state " 1" is associated with the SL PRS resource #1, and a first triggering state "2" is associated with the SL PRS resource #2.

For example, it is assumed that SL PRS resources associated with one or more first triggering states include the SL PRS resource #0, the SL PRS resource #1, the SL PRS resource #2, and an SL PRS resource #3, where the SL PRS resource #0, the SL PRS resource #1, and the SL PRS resource #2 belong to an SL PRS configuration 1, and the SL PRS resource #3 belongs to an SL PRS configuration 2. In this case, the first information may include SL PRS configuration information of the SLPRS configuration 1 to which the SL PRS resource #0, the SL PRS resource #1, and the SL PRS resource #2 belong, and SL PRS configuration information of the SL PRS configuration 2 to which the SL PRS resource #3 belongs.

It may be understood that the first information may include a correspondence between each SLPRS resource and SLPRS configuration information of an SLPRS configuration to which the SL PRS resource belongs. For example, the first information may include a correspondence between the SL PRS resource #0 and the SL PRS configuration information of the SL PRS configuration 1, a correspondence between the SLPRS resource #1 and the SLPRS configuration information of the SL PRS configuration 1, .... Alternatively, the first information may include a correspondence between a plurality of SL PRS resources belonging to a same SL PRS configuration and SL PRS configuration information of the SL PRS configuration to which the plurality of SL PRS resources belong. For example, the first information may include a correspondence between the SL PRS resource #0, the SL PRS resource #1, and the SL PRS resource #2 and the SL PRS configuration information of the SL PRS configuration 1, and the first information includes a correspondence between the SL PRS resource #3 and the SL PRS configuration information of the SLPRS configuration 2.

Optionally, each resource pool may further include identification information indicating whether an SL PRS resource in the resource pool is indicated by the network device or autonomously selected by the terminal. For example, if the SL PRS resource needs to be triggered based on an indication of the network device, the resource pool or the SL PRS resource may have one piece of identification information, where the identification information indicates that the SL PRS resource is triggered based on the indication of the network device. For another example, if the SL PRS resource needs to be autonomously selected by the terminal for triggering, the resource pool or the SL PRS resource may have one piece of identification information, where the identification information indicates that the SL PRS resource is triggered based on autonomous selection of the terminal. The first information may include identification information indicating whether an SL PRS resource associated with a first triggering state is triggered based on the indication of the network device or triggered by the terminal through autonomous selection.

### 4. Information about sending time of an SL PRS

For example, the first information may include information about sending time of an SLPRS corresponding to an SLPRS resource associated with a first triggering state. Alternatively, it may also be understood as information about receiving time of the SL PRS. The information about the sending time of the SL PRS is a time difference between the receiving time of the SL PRS corresponding to the SL PRS resource associated with the first triggering state and receiving time of control information used for triggering the SL PRS. Alternatively, the information about the sending time of the SL PRS is a time difference between the sending time of the SL PRS corresponding to the SL PRS resource associated with the first triggering state and sending time of control information used for triggering the SL PRS.

It should be understood that the control information used for triggering the SL PRS may be SCI.

Refer to FIG. 5. It is assumed that the SCI is received at ti or sent at ti. In this case, the sending time of the SL PRS may be a time difference between the receiving time of the SL PRS and t1. Assuming that the time difference is △t, the sending time of the SL PRS is t₁+△t.

In an example, when a subcarrier spacing of the SL PRS is inconsistent with a subcarrier spacing of the control information, or a quantity of slots occupied by the SL PRS is inconsistent with a quantity of slots occupied by the control information, the time difference may be determined by a large subcarrier spacing. For example, it is assumed that the subcarrier spacing of the SL PRS is a first subcarrier spacing, and the subcarrier spacing of the control information is a second subcarrier spacing. When the first subcarrier spacing is inconsistent with the second subcarrier spacing, the time difference may be determined by a subcarrier spacing with a larger value in the first subcarrier spacing and the second subcarrier spacing. Specifically, assuming that the first subcarrier spacing is greater than the second subcarrier spacing, the time difference may be determined by the first subcarrier spacing. For example, it is assumed that the first subcarrier spacing is 15 kHz. When the first information indicates that a slot offset (slot offset) corresponding to an SL PRS resource associated with one first triggering state is 2, it may be considered that the time difference is 2 ms. For another example, it is assumed that the first subcarrier spacing is 30 kHz. When the first information indicates that a slot offset (slot offset) corresponding to an SL PRS resource associated with one first triggering state is 2, it may be considered that the time difference is 1 ms.

In another example, when a subcarrier spacing of the SL PRS is inconsistent with a subcarrier spacing of the control information, or a quantity of slots occupied by the SL PRS is inconsistent with a quantity of slots occupied by the control information, the time difference may be determined by the subcarrier spacing of the SL PRS. For example, it is assumed that the subcarrier spacing of the SL PRS is a first subcarrier spacing, and the subcarrier spacing of the control information is a second subcarrier spacing. When the first subcarrier spacing is inconsistent with the second subcarrier spacing, the time difference may be determined by the first subcarrier spacing

Based on the foregoing solution, a parameter of the SL PRS may be configured for the terminal by using the first information, to support transmission of the SL PRS. The first information may be shared by a plurality of terminals, in other words, the plurality of terminals may obtain the same first information. The plurality of terminals may sense an occupied SL PRS resource when transmitting the SL PRS, to reduce interference to the SL PRS. In addition, the second information is used to configure the positioning measurement type, and may flexibly indicate different terminals to use different specific positioning technologies based on the SL PRS, for example, SL-TOA or SL-RTOA.

With reference to the foregoing items 1 to 4, a triggering state association table may be shown in Table 2.

**Table 2: Example of the triggering state association table**

| First triggering state (triggering state) | SLPRS Frequency (freq) | BWP information | Resource pool information (pool ID) | SLPRS resource (SL PRS resource) | Time difference (slot offset) |
|---|---|---|---|---|---|
| 00 | No triggering (no triggering) | No triggering (no triggering) | No triggering (no triggering) | No triggering (no triggering) | N/A |
| 01 | Freq #0 | BWP #0 | Pool #0 | SLPRS resource #0 | 0 |
| 10 | Freq #1 | BWP #0 | Pool #0 | SLPRS resource #0 | 2 |
| 11 | Freq #1 | BWP #0 | Pool #0 | SLPRS resource #0 | 2 |

It can be learned from Table 2 that, when the first triggering state is 00, it may be considered that the first triggering state does not trigger any SL PRS resource, or it may be considered that the first triggering state "00" is not associated with any SL PRS resource. When the first triggering state is 01, it may be considered that the SL PRS resource #0 is triggered, in other words, the first triggering state "01" is associated with the SL PRS resource #0, the SL PRS resource #0 belongs to the resource pool #0 and is located in the BWP #0, and an SL frequency of the SL PRS resource #0 is the freq #0. In addition, a time difference corresponding to the SL PRS resource #0 is 0, in other words, a time difference between receiving time of an SL PRS corresponding to the SL PRS resource #0 and receiving time of control information used for triggering the SLPRS resource #0 is 0. The other may be deduced by analog. Table 2 shows content that may be included in the first information. It may be understood that the first information does not necessarily include all the content in Table 2. For example, the first information may include at least the first column and the fourth column shown in Table 2. Optionally, the first information may further include one or more of the second column, the third column, the fifth column, and the sixth column shown in Table 2. Table 2 does not constitute a limitation on the triggering state association table. That the first triggering state in Table 2 is 2 bits is used as an example. Actually, the first triggering state may be represented by more bits, for example, 3 bits, 4 bits, or 5 bits.

The following shows, with reference to the first information shown in Table 2, the second information that may be received by the second terminal, as shown in Table 3.

**Table 3: Example of the second information**

| First triggering state (triggering state) | Positioning measurement type |
|---|---|
| 00 | No triggering (no triggering) |
| 01 | SL-TDOA |
| 10 | Receiving-sending time difference and receiving-sending frequency difference |
| 11 | Positioning measurement does not need to be reported |

It can be learned from Table 3 that, when the first triggering state is 00, it may be considered that the first triggering state is not associated with any positioning measurement type. When the first triggering state is 01, the associated positioning measurement type is the SL-TDOA. In other words, when the second terminal receives an SL PRS resource associated with the first triggering state "01 ", the second terminal needs to obtain the SL-TDOA based on the SL PRS resource and send the SL-TDOA to the first terminal. The other may be deduced by analog. Table 3 shows content that may be included in the second information. It may be understood that Table 3 may further include any one of the second column to the sixth column shown in Table 2, and Table 3 does not constitute a limitation on the second information.

Optionally, the fourth information may be implemented with reference to the second information. The following shows a possible implementation of the fourth information by using Table 4.

**Table 4: Example of the fourth information**

| First triggering state (triggering state) | Non-positioning measurement type |
|---|---|
| 00 | No triggering (no triggering) |
| 01 | Orientation information of a terminal |
| 10 | Serving network device information of the terminal |
| 11 | Absolute location information of the terminal |

It can be learned from Table 4 that, when the first triggering state is 00, it may be considered that the first triggering state is not associated with any non-positioning measurement type. When the first triggering state is 01, the associated non-positioning measurement type is the orientation information of the terminal. In other words, when the second terminal receives an SL PRS resource associated with the first triggering state "01 ", the second terminal needs to send an orientation information of the second terminal to the first terminal. The other may be deduced by analog. Table 4 shows content that may be included in the fourth information. It may be understood that Table 4 may further include any one of the second column to the sixth column shown in Table 2, and Table 4 does not constitute a limitation on the fourth information.

It should be noted that Table 3 and Table 4 may be two different tables, or may be combined into a same table. In other words, non-positioning measurement types and positioning measurement types associated with all the first triggering states may be sent to the second terminal together.

In a possible implementation, the first information may be further used to determine a quantity N of bits occupied by a triggering state of the SLPRS resource in the control information. The triggering state of the SL PRS resource may be understood as a quantity of bits in the first triggering state, or a quantity of bits occupied by the first triggering state in the control information. Table 1 is used as an example. When the first triggering state is 01, the quantity of bits of the first triggering state is 2, in other words, the quantity of bits occupied by the triggering state of the SL PRS resource in the control information is 2. 2^{N} is a quantity of first triggering states, where one of the first triggering states may not trigger any SL PRS resource, for example, 00 shown in Table 1 and Table 2. It should be noted that, 00 is merely used as an example herein to indicate that no SL PRS is triggered. Alternatively, another bit value may be used to correspondingly indicate that no SL PRS is triggered. This is not limited in this application.

In a possible case, the trigger bit may be carried in 1^{st} stage SCI (1^{st} stage SCI), for example, an SCI format 1-A (SCI format 1-A). For example, the trigger bit may be carried in an existing bit in the 1^{st} stage SCI. Alternatively, it may be understood as that a bit in the 1^{st} stage SCI may be reused as the trigger bit. For example, some bits already exist in the 1^{st} stage SCI, but these bits indicate specific information, and these bits may be reused as trigger bits. In other words, these bits may indicate the foregoing specific information, or may indicate the first triggering state. Alternatively, the trigger bit may be carried in an idle bit in the 1^{st} stage SCI. The idle bit may be understood as that although some bits already exist in the 1^{st} stage SCI, these existing bits do not indicate or carry any information. When the trigger bit is located in the 1^{st} stage SCI, because the terminal first receives the 1^{st} stage SCI and then receives 2^{nd} stage SCI based on information in the 1^{st} stage SCI, the terminal may quickly determine the indicated first triggering state, so that a scheduled SL PRS resource can be quickly determined.

In another possible case, the trigger bit may be carried in 2^{nd} stage SCI (2^{nd} stage SCI). For example, a first field may be carried in an SCI format 2-A (SCI format 2-A), or carried in an SCI format 2-B (SCI format 2-B). For example, the trigger bit may be some existing bits in the current SCI format 2-A or SCI format 2-B, or may be an idle bit in the current SCI format 2-A or SCI format 2-B. Alternatively, some bits may be extended in the current SCI format 2-A or SCI format 2-B, and the trigger bit may be indicated by the extended bits. For another example, a new 2^{nd} stage SCI format is introduced, for example, an SCI format 2-C (SCI format 2-C). The trigger bit may be indicated by a bit in the SCI format 2-C. When the trigger bit is located in the 2^{nd} stage SCI, because some bits may be extended in the 2^{nd} stage SCI or the new 2^{nd} stage SCI format may be introduced to indicate the trigger bit, more first triggering states may be indicated, and requirements of a large quantity of terminals can be met.

It should be understood that a format of the 2^{nd} stage SCI is indicated by the bits in the 1^{st} stage SCI.

Based on the foregoing solution, a related parameter of the SL PRS may be indicated for the terminal. Therefore, transmission of the SL PRS may be triggered between terminals, for example, between the first terminal and the second terminal, by using the first triggering state associated with the SL PRS. The following describes an SL PRS triggering manner. FIG. 6 is an example flowchart of a PRS triggering manner, which may include the following operations.

S601: A first terminal sends first control information to a second terminal.

Correspondingly, the second terminal may receive the first control information from the first terminal.

The first control information may include a first field. The first field herein may indicate one or more of first triggering states. For example, the first field may indicate the first triggering states 01, 10, and 11 shown in Table 1.

In a possible case, the first control information may be 1^{st} stage SCI. In other words, the first field may be carried in the 1^{st} stage SCI, and the second terminal may determine an SL PRS resource by parsing the 1^{st} stage SCI. In another possible case, the first control information may be 2^{nd} stage SCI. In other words, the first field may be carried in the 2^{nd} stage SCI.

Optionally, if the first field is carried in the 2^{nd} stage SCI, before S601, the manner may further include S600: The first terminal may send the 1^{st} stage SCI to the second terminal. The 1^{st} stage SCI may indicate the first control information in S601, in other words, a format of the 2^{nd} stage SCI.

In a possible implementation, the one or more first triggering states indicated by the first field may be indicated by a network device, for example, indicated by the network device by using DCI or RRC signaling. Alternatively, the one or more first triggering states indicated by the first field may be autonomously selected by the first terminal, for example, selected by the first terminal from the first information in S401.

Optionally, the first control information in S601 may be further used to schedule a PSSCH, and the PSSCH may be used to carry SL data. For example, a positioning measurement type associated with an SL PRS resource triggered by the first control information may be transmitted on the PSSCH.

S602: The first terminal sends an SL PRS.

Correspondingly, the second terminal receives the SL PRS.

For example, the first terminal may send an SL PRS corresponding to an SL PRS resource associated with the one or more first triggering states indicated by the first field. It may be understood as that the first terminal requests the second terminal to obtain, by using the SL PRS, a positioning measurement type associated with the first triggering state. For example, if the first field indicates the first triggering state 01 shown in Table 1, the first terminal may send an SLPRS resource #0 associated with the first triggering state 01. In this case, the first terminal may send an SL PRS corresponding to the SL PRS resource #0 or the first terminal may send the SL PRS, in other words, send the SL PRS on the SL PRS resource #0.

Based on the foregoing S601 and S602, transmission of the SL PRS may be implemented between terminals, for example, between the first terminal and the second terminal, by using a related parameter of the SL PRS configured in the embodiment shown in FIG. 4. Optionally, based on the triggered SL PRS, positioning based on the SL PRS may be further implemented between the terminals. The following provides descriptions by using S603 and S604.

In an example, FIG. 6 may further include the following S603 and S604.

S603: The second terminal measures the SL PRS.

For example, the second terminal may measure time of arrival, an angle of arrival, a frequency of arrival, or the like of the SLPRS. It should be understood that the second information sent by the first terminal to the second terminal in S402 may include the positioning measurement type associated with the first triggering state indicated by the first control information in S601. Therefore, the second terminal may determine, in the second information, the positioning measurement type associated with the first triggering state indicated by the first control information in S601, to determine which information of the SL PRS is measured by the second terminal in S603. For example, in S402, the second information indicates that the positioning measurement type associated with the first triggering state indicated by the first control information in S601 is SL-TOA. In this case, in S603, the second terminal may measure the time of arrival of the SL PRS.

S604: The second terminal sends third information to the first terminal.

Correspondingly, the first terminal receives the third information from the second terminal.

The third information herein may be a measurement value of the positioning measurement type associated with the first triggering state indicated by the first control information in S601.

For example, assuming that a positioning measurement type associated with one first triggering state is an SL receiving-sending time difference, the third information may include a measurement value of the SL receiving-sending time difference. It should be understood that, the third information may include one measurement value of the SL receiving-sending time difference. For example, when the first triggering state is associated with one SL PRS resource, the second terminal may obtain one measurement value of the SL receiving-sending time difference by measuring an SL PRS corresponding to the SL PRS resource. Alternatively, the third information may include a plurality of measurement values of SL receiving-sending time differences. For example, when the first triggering state is associated with a plurality of SL PRS resources, the second terminal may obtain the plurality of measurement values of SL receiving-sending time differences by measuring the plurality of SL PRS resources.

For another example, the first triggering state is associated with a plurality of positioning measurement types, which are respectively an SL receiving-sending time difference and an SL-AOA. In this case, the third information may include a measurement value of the SL receiving-sending time difference and a measurement value of the SL-AOA, or the third information may include only the measurement value of the SL receiving-sending time difference but not include the measurement value of the SL-AOA, or the third information may include only the measurement value of the SL-AOA but not include the measurement value of the SL receiving-sending time difference. It should be understood that when the third information includes the measurement value of the SL receiving-sending time difference, the third information may include one or more measurement values of the SL receiving-sending time differences. Similarly, when the third information includes the measurement value of the SL-AOA, the third information may also include one or more measurement values of the SL-AOAs.

In S604, the second terminal may carry the positioning measurement type by using the PSSCH scheduled by using the first control information in S601, and send the PSSCH to the first terminal.

Optionally, in the embodiment shown in FIG. 4, the first terminal may further send fourth information, namely, a non-positioning measurement type, to the second terminal. The second terminal may also send fifth information to the first terminal. The fifth information herein may be a value of a non-positioning measurement type associated with the first triggering state indicated by the first control information in S601. For example, assuming that the first triggering state in S601 is associated with orientation information of a terminal, the fifth information may include orientation information of the second terminal.

It should be noted that the fifth information and the fourth information are sent by using same signaling, or are sent by using different signaling. This is not specifically limited in this application.

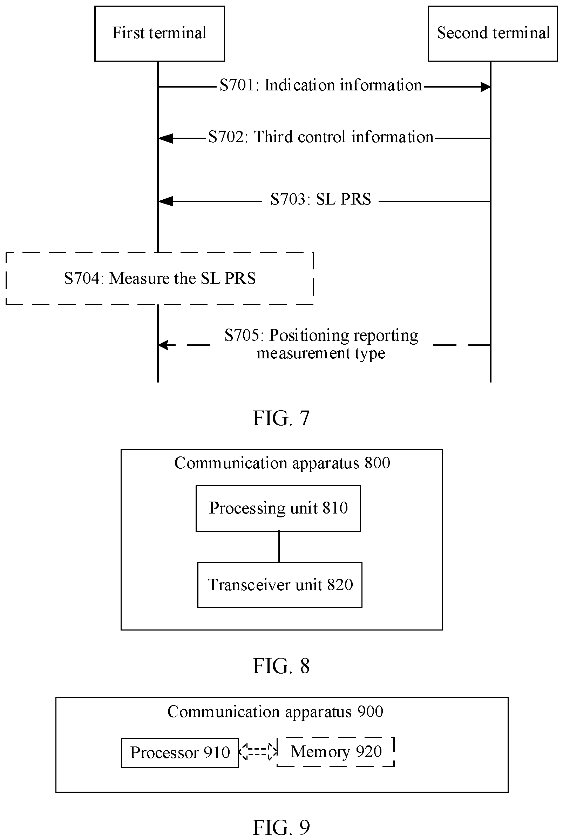

In a possible implementation, the first terminal may further indicate to reversely transmit an SL PRS to the second terminal. The reversely transmitted SL PRS is an SL PRS that is sent by the second terminal and that is received by the first terminal. In other words, the first terminal may indicate the second terminal to send the SL PRS to the first terminal. For example, when the first terminal needs to perform round trip time (round trip time, RTT) measurement, the first terminal may indicate to reversely transmit the SL PRS to the second terminal. The following provides descriptions by using FIG. 7. It should be understood that the embodiment shown in FIG. 7 may be combined with the embodiment shown in FIG. 6, or may be implemented as an independent embodiment.

S701: A first terminal sends indication information to a second terminal.

Correspondingly, the second terminal receives the indication information from the first terminal. The indication information may indicate to reversely transmit an SL PRS. In other words, in S701, the first terminal indicates, by using the indication information, the second terminal to send the SLPRS.

Optionally, the indication information may include one or more first triggering states. In other words, the first terminal may recommend the reversely transmitted SL PRS to the second terminal.

S702: The second terminal sends third control information to the first terminal.

Correspondingly, the first terminal receives the third control information from the second terminal. The third control information may include a first field, and the first field indicates one or more of the first triggering states in S401. For a manner in which the second terminal sends the third control information to the first terminal, refer to a manner in which the first terminal sends first control information to the second terminal. Details are not described herein again.

It should be noted that the first triggering state indicated by the third control information may be indicated by a network device. Alternatively, the first triggering state may be autonomously selected by the second terminal. For example, the second terminal may select the first triggering state from the first triggering state corresponding to the SL PRS recommended by the first terminal in S701. It may be understood that, the SLPRS recommended by the first terminal in S701 may reflect a resource occupation condition of the first terminal. To be specific, at receiving time of the SL PRS recommended by the first terminal, some resources of the first terminal are not occupied, and the SL PRS may be received. Therefore, if the second terminal selects, from the first triggering state corresponding to the SL PRS recommended by the first terminal, the first triggering state indicated by the third control information, the transmitted SL PRS may be easily received by the first terminal.

Alternatively, the second terminal may select, from the first triggering state configured by using the first information in S401, the first triggering state indicated by the third control information. It may be understood that, a quantity of first triggering states that can be selected by the second terminal from the first triggering state configured by using the first information in S401 is large, and may be greater than a quantity of first triggering states corresponding to the SL PRS recommended by the first terminal, that is, there may be a large quantity of SL PRSs that can be transmitted.

S703: The second terminal sends the SL PRS to the first terminal.

Correspondingly, the first terminal receives the SL PRS from the second terminal. The SL PRS herein may be an SL PRS corresponding to an SL PRS resource associated with the first triggering state indicated by the third control information in S702. It should be understood that, for a manner in which the second terminal sends the SL PRS to the first terminal, refer to a manner in which the first terminal sends the SL PRS to the second terminal. Details are not described herein again.

Based on the foregoing S701 and S702, reverse transmission of the SL PRS may be implemented between terminals, for example, between the first terminal and the second terminal, by using a related parameter of the SL PRS configured in the embodiment shown in FIG. 4. Optionally, based on the triggered SLPRS used for reverse transmission, positioning based on the reversely transmitted SL PRS may be further implemented between the terminals. The following provides descriptions by using S703 and S704.

In an example, FIG. 7 may further include the following S704 and S705.

S704: The first terminal measures the SL PRS.

For example, the second terminal may measure time of arrival, an angle of arrival, a frequency of arrival, or the like of the SL PRS. It should be understood that, for a manner in which the first terminal measures the SL PRS, refer to an implementation in which the second terminal measures the SL PRS in S603. Details are not described herein again.

S705: The second terminal sends a positioning measurement type to the first terminal.

Correspondingly, the first terminal receives the positioning measurement type from the second terminal. It should be understood that, for a manner in which the first terminal sends the positioning measurement type to the second terminal, refer to an implementation in which the second terminal sends the positioning measurement type to the first terminal in S604. Details are not described herein again.

Optionally, the second terminal may also send fourth information, namely, a non-positioning measurement type, to the first terminal. In this case, in the method embodiment shown in FIG. 7, the first terminal may send fifth information to the second terminal. The fifth information herein may be a value of a non-positioning measurement type associated with the first triggering state indicated by the third control information in S701. For implementation of this step, refer to the foregoing related step in which the first terminal indicates the fourth information to the second terminal. Details are not described herein again.

Based on the foregoing solution, the first terminal may indicate to reversely transmit the SL PRS to the second terminal by using the indication information, so that transmission of the SL PRS can be flexibly applied to more scenarios, for example, RTT positioning.

The following describes, with reference to the accompanying drawings, communication apparatuses configured to implement the foregoing method in embodiments of this application. Therefore, all the foregoing content may be used in the following embodiments. Repeated content is not described again.

FIG. 8 is a schematic block diagram of a communication apparatus 800 according to an embodiment of this application. The communication apparatus 800 may correspondingly implement functions or steps implemented by the first terminal or the second terminal in the foregoing method embodiments. The communication apparatus may include a processing unit 810 and a transceiver unit 820. Optionally, a storage unit may be further included. The storage unit may be configured to store instructions (code or a program) and/or data. The processing unit 810 and the transceiver unit 820 may be coupled to the storage unit. For example, the processing unit 810 may read instructions (code or a program) and/or data in the storage unit, to implement a corresponding method. The foregoing units may be independently disposed, or may be partially or completely integrated.

In some possible implementations, the communication apparatus 800 can correspondingly implement behaviors and functions of the first terminal in the foregoing method embodiments. For example, the communication apparatus 800 may be the first terminal, or may be a component (for example, a chip or a circuit) used in the first terminal. The transceiver unit 820 may be configured to perform all receiving or sending operations performed by the first terminal in the embodiment shown in FIG. 4, for example, S402 in the embodiment shown in FIG. 4, and/or another process used to support the technology described in this specification. The processing unit 810 is configured to perform all operations performed by the first terminal in the embodiment shown in FIG. 4 except a receiving and sending operation, and/or configured to support another process of the technology described in this specification, for example, S401 in the embodiment shown in FIG. 4.

For example, the processing unit 810 is configured to obtain first information. The first information includes one or more first triggering states. Each of the one or more first triggering states is associated with one or more SL PRS resources. The transceiver unit 820 is configured to send the second information to the second terminal device. The second information includes one or more positioning measurement types, and each of the one or more positioning measurement types is associated with the one or more first triggering states.

In some possible implementations, the communication apparatus 800 can correspondingly implement behaviors and functions of the second terminal in the foregoing method embodiments. For example, the communication apparatus 800 may be the second terminal, or may be a component (for example, a chip or a circuit) used in the second terminal. The transceiver unit 820 may be configured to perform all receiving or sending operations performed by the second device in the embodiment shown in FIG. 4, for example, S402 in the embodiment shown in FIG. 4, and/or another process used to support the technology described in this specification. The processing unit 810 is configured to perform all operations performed by the second device in the embodiment shown in FIG. 4 except a receiving and sending operation, for example, S401 in the embodiment shown in FIG. 4, and/or another process used to support the technology described in this specification.

For example, the processing unit 810 is configured to obtain first information. The first information includes the one or more first triggering states, and each of the one or more first triggering states is associated with the one or more SL PRS resources. The transceiver unit 820 is configured to receive second information from the first terminal device. The second information includes the one or more positioning measurement types, and each of the one or more positioning measurement types is associated with the one or more first triggering states.

For operations performed by the processing unit 810 and the transceiver unit 820, refer to related descriptions in the foregoing method embodiments.

It should be understood that the processing unit 810 in this embodiment of this application may be implemented by a processor or a processor-related circuit component, and the transceiver unit 820 may be implemented by a transceiver or a transceiver-related circuit component, or a communication interface.

Based on a same concept, as shown in FIG. 9, an embodiment of this application provides a communication apparatus 900. The communication apparatus 900 includes a processor 910. Optionally, the communication apparatus 900 may further include a memory 920, configured to store instructions executed by the processor 910, store input data required by the processor 910 to run the instructions, or store data generated after the processor 910 runs the instructions. The processor 910 may implement, by using instructions stored in the memory 920, the method shown in the foregoing method embodiment.

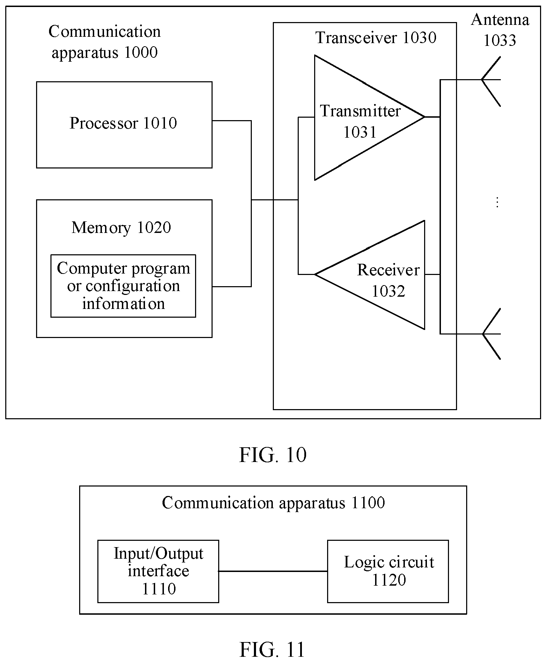

Based on a same concept, as shown in FIG. 10, an embodiment of this application provides a communication apparatus 1000. The communication apparatus 1000 may be a chip or a chip system. Optionally, in this embodiment of this application, the chip system may include a chip, or may include a chip and another discrete device.

The communication apparatus 1000 may include at least one processor 1010. The processor 1010 is coupled to a memory. Optionally, the memory may be located inside the apparatus, or may be located outside the apparatus. For example, the communication apparatus 1000 may further include at least one memory 1020. The memory 1020 stores a necessary computer program, configuration information, a computer program or instructions, and/or data for implementing any one of the foregoing embodiments. The processor 1010 may execute the computer program stored in the memory 1020, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. In embodiments of this application, a specific connection medium between the transceiver 1030, the processor 1010, and the memory 1020 is not limited.

The communication apparatus 1000 may further include a transceiver 1030, and the communication apparatus 1000 may perform information exchange with another device by using a transceiver 1030. The transceiver 1030 may be a circuit, a bus, a transceiver, or any other apparatus that can be configured to exchange information, or is referred to as a signal transceiver unit. As shown in FIG. 10, the transceiver 1030 includes a transmitter 1031, a receiver 1032, and an antenna 1033. In addition, when a communication apparatus 1000 is a chip type apparatus or circuit, the transceiver in the communication apparatus 1000 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1000 may be used in a first terminal. Specifically, the communication apparatus 1000 may be the first terminal, or may be an apparatus that can support the first terminal and implement a function of the first terminal in any one of the foregoing embodiments. The memory 1020 stores a necessary computer program, a computer program, or instructions, and/or data for implementing a function of the first terminal in any one of the foregoing embodiments. The processor 1010 may execute the computer program stored in the memory 1020, to complete the method performed by the first terminal in any one of the foregoing embodiments. When used in the first terminal, the transmitter 1031 in the communication apparatus 1000 may be configured to transmit second information by using the antenna 1033, and the receiver 1032 may be configured to receive third information by using the antenna 1033.

In another possible implementation, the communication apparatus 1000 may be used in a second terminal. Specifically, the communication apparatus 1000 may be the second terminal, or may be an apparatus that can support the second terminal and implement a function of the second terminal in any one of the foregoing embodiments. The memory 1020 stores a necessary computer program, a computer program, or instructions, and/or data for implementing a function of the second terminal in any one of the foregoing embodiments. The processor 1010 may execute the computer program stored in the memory 1020, to complete the method performed by the second terminal in any one of the foregoing embodiments. When used in the second terminal, the receiver 1032 in the communication apparatus 1000 may be configured to obtain the second information by using the antenna 1033, and the transmitter 1031 may be configured to send third information by using the antenna 1033.

The communication apparatus 1000 provided in this embodiment may be used in the first terminal to complete the method performed by the first terminal, or may be used in the second terminal to complete the method performed by the second terminal. Therefore, for technical effects that can be achieved by this embodiment, refer to the foregoing method embodiments. Details are not described herein again.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Based on the foregoing embodiments, refer to FIG. 11. An embodiment of this application further provides another communication apparatus 1100, including an input/output interface 1110 and a logic circuit 1120. The input/output interface 1110 is configured to receive a code instruction and transmit the code instruction to the logic circuit 1120. The logic circuit 1120 is configured to run the code instruction to perform the method performed by the first terminal or the second terminal in any one of the foregoing embodiments.

The following describes in detail an operation performed by the communication apparatus used in the first terminal or the second terminal.

In an optional implementation, the communication apparatus 1100 may be used in a first terminal, to perform the method performed by the first terminal. Specifically, for example, the method performed by the first terminal in the embodiment shown in FIG. 4. The logic circuit 1120 is configured to obtain first information. The first information includes one or more first triggering states, and each of the one or more first triggering states is associated with one or more SL PRS resources. The input/output interface 1110 is configured to output second information to the second terminal device. The second information includes one or more positioning measurement types, and each of the one or more positioning measurement types is associated with the one or more first triggering states.

In another optional implementation, the communication apparatus 1100 may be used in the second terminal, to perform the method performed by the second terminal. Specifically, for example, the method performed by the second terminal in the method embodiment shown in FIG. 4. The logic circuit 1120 is configured to obtain the first information. The first information includes one or more first triggering states, and each of the one or more first triggering states is associated with one or more SL PRS resources. The input/output interface 1110 is configured to input the second information. The second information includes one or more positioning measurement types, and each of the one or more positioning measurement types is associated with the one or more first triggering states.

The communication apparatus 1100 provided in this embodiment may be used in the first terminal to perform the method performed by the first terminal, or may be used in the second terminal to complete the method performed by the second terminal. Therefore, for technical effects that can be achieved by this embodiment, refer to the foregoing method embodiments. Details are not described herein again.

Based on the foregoing embodiments, an embodiment of this application further provides a communication system. The system includes at least one communication apparatus used in a first communication apparatus and at least one communication apparatus used in another communication apparatus. For technical effects that can be achieved by this embodiment, refer to the foregoing method embodiments. Details are not described herein again.

Based on the foregoing embodiments, an embodiment of this application further provides a communication system. The communication system includes at least one communication apparatus used in a second communication apparatus and at least one communication apparatus used in a third communication apparatus. For technical effects that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include: any medium that can store program code, such as a USB flash drive, a removable hard disk, a read-only memory, a random access memory, a magnetic disk, or an optical disc.

To implement the functions of the communication apparatus in FIG. 8 to FIG. 11, an embodiment of this application further provides a chip, including a processor, configured to support the communication apparatus in implementing the functions of the transmitting end or the receiving end in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A sidelink positioning reference signal SL PRS parameter configuration method, comprising:
obtaining, by a first terminal device, first information, wherein the first information comprises one or more first triggering states, and each of the one or more first triggering states is associated with one or more SL PRS resources; and
sending, by the first terminal device, second information to a second terminal device, wherein the second information comprises one or more positioning measurement types, and each of the one or more positioning measurement types is associated with the one or more first triggering states.

2. The method according to claim 1, wherein the positioning measurement type comprises that positioning measurement does not need to be reported.

3. The method according to claim 1 or 2, further comprising:
sending, by the first terminal device, first control information to the second terminal device, wherein the first control information indicates one or more of the first triggering states; and
sending, by the first terminal device, an SL PRS corresponding to an SL PRS resource associated with the one or more first triggering states indicated by the first control information.

4. The method according to claim 3, further comprising:
receiving, by the first terminal device, third information from the second terminal device, wherein the third information comprises one or more measurement values, the one or more measurement values are measurement values of the one or more positioning measurement types in the second information, and the one or more positioning measurement types in the second information are associated with the one or more first triggering states indicated by the first control information.

5. The method according to any one of claims 1 to 4, further comprising:
sending, by the first terminal device, indication information to the second terminal device, wherein the indication information indicates to reversely transmit an SL PRS, and the reversely transmitted SL PRS is an SL PRS sent by the second terminal device.

6. The method according to claim 5, wherein the indication information further comprises one or more of the first triggering states, and the one or more first triggering states are associated with the reversely transmitted SL PRS.

7. The method according to claim 5, further comprising:
receiving, by the first terminal device, third control information from the second terminal device, wherein the third control information indicates one or more of the first triggering states; and
receiving, by the first terminal device, an SL PRS corresponding to an SL PRS resource associated with the one or more first triggering states indicated by the third control information.

8. The method according to claim 3, further comprising:
sending, by the first terminal device, second control information to the second terminal device, wherein the second control information indicates a format of the first control information.

9. The method according to any one of claims 1 to 8, further comprising:
sending, by the first terminal device, fourth information to the second terminal device, wherein the fourth information comprises one or more non-positioning measurement types, each of the one or more non-positioning measurement types is associated with the one or more first triggering states, and the non-positioning measurement type comprises one or more of the following: serving network device information of a terminal device, absolute location information of the terminal device, or orientation information of the terminal device.

10. The method according to claim 9, further comprising:
receiving, by the first terminal device, fifth information from the second terminal device, wherein the fifth information comprises a value of one or more non-positioning measurement types associated with the one or more first triggering states indicated by the first control information.

11. The method according to claim 3, wherein the SL PRS resource associated with the one or more first triggering states indicated by the first control information is indicated by a network device, or is selected by the first terminal device.

12. The method according to claim 3, wherein the first control information comprises a first field, the first field indicates the one or more first triggering states, and the first information is further used to determine a quantity of bits of the first field in the first control information.

13. The method according to any one of claims 1 to 12, wherein the first information further comprises one or more of the following: SL frequency information, BWP information, and resource pool information that correspond to each of one or more SL PRS resources associated with the first triggering states.

14. The method according to any one of claims 1 to 13, wherein the first information further comprises information about sending time of the SL PRS resource corresponding to the one or more first triggering states, and the information about the sending time is a time difference between receiving time of the SL PRS corresponding to the one or more first triggering states and receiving time of control information used for triggering the one or more first triggering states.

15. The method according to claim 14, wherein when a first subcarrier spacing of the SL PRS resource corresponding to the one or more first triggering states is different from a second subcarrier spacing of the control information used for triggering the one or more first triggering states, the time difference is based on a larger one in the first subcarrier spacing and the second subcarrier spacing, or the time difference is based on the first subcarrier spacing.

16. A sidelink positioning reference signal SL PRS parameter configuration method, comprising:
obtaining, by a second terminal device, first information, wherein the first information comprises one or more first triggering states, and each of the one or more first triggering states is associated with one or more SL PRS resources; and
receiving, by the second terminal device, second information from a first terminal device, wherein the second information comprises one or more positioning measurement types, and each of the one or more positioning measurement types is associated with the one or more first triggering states.

17. The method according to claim 16, wherein the positioning measurement type comprises that positioning measurement does not need to be reported.

18. The method according to claim 16 or 17, further comprising:
receiving, by the second terminal device, first control information from the first terminal device, wherein the first control information indicates one or more of the first triggering states; and
receiving, by the second terminal device, an SL PRS corresponding to an SL PRS resource associated with the one or more first triggering states indicated by the first control information.

19. The method according to claim 18, further comprising:
sending, by the second terminal device, third information to the first terminal device, wherein the third information comprises one or more measurement values, the one or more measurement values are measurement values of the one or more positioning measurement types in the second information, and the one or more positioning measurement types in the second information are associated with the one or more first triggering states indicated by the first control information.

20. The method according to any one of claims 16 to 19, further comprising:
receiving, by the second terminal device, indication information from the first terminal device, wherein the indication information indicates to reversely transmit an SL PRS, and the reversely transmitted SL PRS is an SL PRS sent by the second terminal device.

21. The method according to claim 20, wherein the indication information further comprises one or more of the first triggering states, and the one or more first triggering states are associated with the reversely transmitted SL PRS.

22. The method according to claim 21, further comprising:
sending, by the second terminal device, third control information to the first terminal device, wherein the third control information indicates one or more of the first triggering states; and
sending, by the second terminal device, an SL PRS corresponding to an SL PRS resource associated with the one or more first triggering states indicated by the third control information.

23. The method according to claim 22, further comprising:
receiving, by the second terminal device, second control information from the first terminal device, wherein the second control information indicates a format of the first control information.

24. The method according to any one of claims 16 to 23, further comprising:
receiving, by the second terminal device, fourth information from the first terminal device, wherein the fourth information comprises one or more non-positioning measurement types, each of the one or more non-positioning measurement types is associated with the one or more first triggering states, and the non-positioning measurement type comprises one or more of the following: serving network device information of a terminal device, absolute location information of the terminal device, or orientation information of the terminal device.

25. The method according to claim 24, further comprising:
sending, by the second terminal device, fifth information to the first terminal device, wherein the fifth information comprises a value of one or more non-positioning measurement types associated with the one or more first triggering states indicated by the first control information.

26. The method according to claim 18, wherein the SL PRS resource associated with the one or more first triggering states indicated by the third control information is indicated by a network device, or is selected by the second terminal device.

27. The method according to claim 18, wherein the first control information comprises a first field, the first field indicates the one or more first triggering states, and the first information is further used to determine a quantity of bits of the first field in the first control information.

28. The method according to any one of claims 16 to 27, wherein the first information further comprises one or more of the following: SL frequency information, BWP information, and resource pool information that correspond to each of one or more SL PRS resources associated with the first triggering states.

29. The method according to any one of claims 16 to 28, wherein the first information further comprises information about sending time of the SL PRS resource corresponding to the one or more first triggering states, and the information about the sending time is a time difference between receiving time of the SL PRS corresponding to the one or more first triggering states and receiving time of control information used for triggering the one or more first triggering states.

30. The method according to claim 29, wherein when a first subcarrier spacing of the SL PRS resource corresponding to the one or more first triggering states is different from a second subcarrier spacing of the control information used for triggering the one or more first triggering states, the time difference is based on a larger one in the first subcarrier spacing and the second subcarrier spacing, or the time difference is based on the first subcarrier spacing.

31. A communication apparatus, comprising: a processing unit and a transceiver unit, wherein
the processing unit is configured to obtain first information, wherein the first information comprises one or more first triggering states, and each of the one or more first triggering states is associated with one or more SL PRS resources; and
the transceiver unit is configured to send second information to a second terminal device, wherein the second information comprises one or more positioning measurement types, and each of the one or more positioning measurement types is associated with the one or more first triggering states.

32. The apparatus according to claim 31, wherein the positioning measurement type comprises that positioning measurement does not need to be reported.

33. The apparatus according to claim 31 or 32, wherein
the transceiver unit is further configured to send first control information to the second terminal device, wherein the first control information indicates one or more of the first triggering states; and
the transceiver unit is further configured to send an SL PRS corresponding to an SL PRS resource associated with the one or more first triggering states indicated by the first control information.

34. The apparatus according to claim 33, wherein
the transceiver unit is further configured to receive third information from the second terminal device, wherein the third information comprises one or more measurement values, the one or more measurement values are measurement values of the one or more positioning measurement types in the second information, and the one or more positioning measurement types in the second information are associated with the one or more first triggering states indicated by the first control information.

35. The apparatus according to any one of claims 31 to 34, wherein
the transceiver unit is further configured to send indication information to the second terminal device, wherein the indication information indicates to reversely transmit an SL PRS, and the reversely transmitted SL PRS is an SL PRS sent by the second terminal device.

36. The apparatus according to claim 35, wherein the indication information further comprises one or more of the first triggering states, and the one or more first triggering states are associated with the reversely transmitted SL PRS.

37. The apparatus according to claim 35, wherein
the transceiver unit is further configured to receive third control information from the second terminal device, wherein the third control information indicates one or more of the first triggering states; and
the transceiver unit is further configured to receive an SL PRS corresponding to an SL PRS resource associated with the one or more first triggering states indicated by the third control information.

38. The apparatus according to claim 33, wherein
the transceiver unit is further configured to send second control information to the second terminal device, wherein the second control information indicates a format of the first control information.

39. The apparatus according to any one of claims 31 to 38, wherein
the transceiver unit is further configured to send fourth information to the second terminal device, wherein the fourth information comprises one or more non-positioning measurement types, each of the one or more non-positioning measurement types is associated with the one or more first triggering states, and the non-positioning measurement type comprises one or more of the following: serving network device information of a terminal device, absolute location information of the terminal device, or orientation information of the terminal device.

40. The apparatus according to claim 39, wherein
the transceiver unit is further configured to receive fifth information from the second terminal device, wherein the fifth information comprises a value of one or more non-positioning measurement types associated with the one or more first triggering states indicated by the first control information.

41. The apparatus according to claim 33, wherein the SL PRS resource associated with the one or more first triggering states indicated by the first control information is indicated by a network device, or is selected by the first terminal device.

42. The apparatus according to claim 33, wherein the first control information comprises a first field, the first field indicates the one or more first triggering states, and the first information is further used to determine a quantity of bits of the first field in the first control information.

43. The apparatus according to any one of claims 31 to 42, wherein the first information further comprises one or more of the following: SL frequency information, BWP information, and resource pool information that correspond to each of one or more SL PRS resources associated with the first triggering states.

44. The apparatus according to any one of claims 31 to 43, wherein the first information further comprises information about sending time of the SL PRS resource corresponding to the one or more first triggering states, and the information about the sending time is a time difference between receiving time of the SL PRS corresponding to the one or more first triggering states and receiving time of control information used for triggering the one or more first triggering states.

45. The apparatus according to claim 44, wherein when a first subcarrier spacing of the SL PRS resource corresponding to the one or more first triggering states is different from a second subcarrier spacing of the control information used for triggering the one or more first triggering states, the time difference is based on a larger one in the first subcarrier spacing and the second subcarrier spacing, or the time difference is based on the first subcarrier spacing.

46. A communication apparatus, comprising: a processing unit and a transceiver unit, wherein
the processing unit is configured to obtain first information, wherein the first information comprises one or more first triggering states, and each of the one or more first triggering states is associated with one or more SL PRS resources; and
the transceiver unit is configured to receive second information from a first terminal device, wherein the second information comprises one or more positioning measurement types, and each of the one or more positioning measurement types is associated with the one or more first triggering states.

47. The apparatus according to claim 46, wherein the positioning measurement type comprises that positioning measurement does not need to be reported.

48. The apparatus according to claim 46 or 47, wherein
the transceiver unit is further configured to receive first control information from the first terminal device, wherein the first control information indicates one or more of the first triggering states; and
the transceiver unit is further configured to receive an SL PRS corresponding to an SL PRS resource associated with the one or more first triggering states indicated by the first control information.

49. The apparatus according to claim 48, wherein
the transceiver unit is further configured to send third information to the first terminal device, wherein the third information comprises one or more measurement values, the one or more measurement values are measurement values of the one or more positioning measurement types in the second information, and the one or more positioning measurement types in the second information are associated with the one or more first triggering states indicated by the first control information.

50. The apparatus according to any one of claims 46 to 49, wherein
the transceiver unit is further configured to receive indication information from the first terminal device, wherein the indication information indicates to reversely transmit an SLPRS, and the reversely transmitted SL PRS is an SL PRS sent by the second terminal device.

51. The apparatus according to claim 50, wherein the indication information further comprises one or more of the first triggering states, and the one or more first triggering states are associated with the reversely transmitted SL PRS.

52. The apparatus according to claim 51, wherein
the transceiver unit is further configured to send third control information to the first terminal device, wherein the third control information indicates one or more of the first triggering states; and
the transceiver unit is further configured to send an SL PRS corresponding to an SL PRS resource associated with the one or more first triggering states indicated by the third control information.

53. The apparatus according to claim 52, wherein
the transceiver unit is further configured to receive second control information from the first terminal device, wherein the second control information indicates a format of the first control information.

54. The apparatus according to any one of claims 46 to 53, wherein
the transceiver unit is further configured to receive fourth information from the first terminal device, wherein the fourth information comprises one or more non-positioning measurement types, each of the one or more non-positioning measurement types is associated with the one or more first triggering states, and the non-positioning measurement type comprises one or more of the following: serving network device information of a terminal device, absolute location information of the terminal device, or orientation information of the terminal device.

55. The apparatus according to claim 54, wherein
the transceiver unit is further configured to send fifth information to the first terminal device, wherein the fifth information comprises a value of one or more non-positioning measurement types associated with the one or more first triggering states indicated by the first control information.

56. The apparatus according to claim 48, wherein the SL PRS resource associated with the one or more first triggering states indicated by the third control information is indicated by a network device, or is selected by the second terminal device.

57. The apparatus according to claim 48, wherein the first control information comprises a first field, the first field indicates the one or more first triggering states, and the first information is further used to determine a quantity of bits of the first field in the first control information.

58. The apparatus according to any one of claims 46 to 57, wherein the first information further comprises one or more of the following: SL frequency information, BWP information, and resource pool information that correspond to each of one or more SL PRS resources associated with the first triggering states.

59. The apparatus according to any one of claims 46 to 58, wherein the first information further comprises information about sending time of the SL PRS resource corresponding to the one or more first triggering states, and the information about the sending time is a time difference between receiving time of the SL PRS corresponding to the one or more first triggering states and receiving time of control information used for triggering the one or more first triggering states.

60. The apparatus according to claim 59, wherein when a first subcarrier spacing of the SL PRS resource corresponding to the one or more first triggering states is different from a second subcarrier spacing of the control information used for triggering the one or more first triggering states, the time difference is based on a larger one in the first subcarrier spacing and the second subcarrier spacing, or the time difference is based on the first subcarrier spacing.

61. A communication apparatus, wherein the apparatus comprises a processor and a memory, wherein
the memory is configured to store a computer program or instructions; and
the processor is configured to execute the computer program or the instructions in the memory, so that the apparatus performs the method according to any one of claims 1 to 15 or the apparatus performs the method according to any one of claims 16 to 30.

62. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 15 or the electronic apparatus is enabled to perform the method according to any one of claims 16 to 30.

63. A computer program product, comprising computer-executable instructions, wherein when the computer-executable instructions are run on a computer, the computer is enabled to perform the method according to any one of claims 1 to 15 or the method according to any one of claims 16 to 30.

64. A communication system, comprising the communication apparatus according to any one of claims 31 to 45 and the communication apparatus according to any one of claims 46 to 60.

65. A chip system, configured to perform the method according to any one of claims 1 to 15 or the method according to any one of claims 16 to 30.
